# FASCICULE DE BREVET EUROPEEN

(11) **EP 3 318 023 B1**
(45) Date de publication et mention de la délivrance du brevet: **17.06.2020**
(21) Numéro de dépôt: 16750901.7
(22) Date de dépôt: 29.06.2016
(51) Int. Cl.: H04L 12/721, H04L 12/707, H04L 29/12, H04L 12/709, H04L 29/08, H04L 29/06

(54) **PROCÉDÉ D'OPTIMISATION DE LA CHARGE D'UN CONCENTRATEUR DE CONNEXIONS RÉSEAU**
VERFAHREN ZUR OPTIMIERUNG DER LADUNG EINES NETZWERKVERBINDUNGS-HUBS
METHOD OF OPTIMIZING THE LOADING OF A NETWORK CONNECTIONS HUB

(30) Priorité: 01.07.2015 FR 1556204
(43) Date de publication de la demande: 09.05.2018
(73) Titulaire: Orange, 75015 Paris (FR)
(72) Inventeur: BOUCADAIR, Mohamed, 35830 Betton (FR); JACQUENET, Christian, 35131 Pont-Pean (FR)
(86) Numéro de dépôt international: PCT/FR2016/051614
(87) Numéro de publication internationale: WO 2017/001776

(56) Documents cités:
- EP-A1- 2 882 148
- WO-A1-2015/055945
- US-A1- 2013 194 963
- POSTEL ISI J: "DARPA INTERNET PROGRAM PROTOCOL SPECIFICATION INTERNET CONTROL MESSAGE PROTOCOL; rfc792.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1 septembre 1981 (1981-09-01), XP015006774, ISSN: 0000-0003
- HAMPEL T KLEIN ALCATEL-LUCENT G: "MPTCP Proxies and Anchors; draft-hampel-mptcp-proxies-anchors-00.txt" , MPTCP PROXIES AND ANCHORS; DRAFT-HAMPEL-MPTCP-PROXIES-ANCHORS-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 8 février 2012 (2012-02-08), pages 1-30, XP015080543,

## Description

La présente invention concerne le domaine des télécommunications, et notamment les réseaux de communications aptes à mettre en œuvre le protocole IP (Internet Protocol). Plus particulièrement, la présente invention concerne la fourniture de services dans les réseaux IP « à valeur ajoutée », c'est-à-dire les réseaux capables d'effectuer des traitements différenciés selon la nature du trafic de données acheminé dans le réseau.

L'invention est définie par une revendication de procédé (revendication 1), d'appareil (revendication 7), de moyen de stockage (revendication 13), et de programme d'ordinateur (revendication 14). Des revendications dépendantes définissent des modes de réalisation additionnels.

L'invention s'applique à tout type de dispositif-client tel qu'un terminal fixe ou mobile, ou une passerelle domestique (« *Residential Gateway* » en anglais), ou une passerelle située dans une entreprise, ou une passerelle d'opérateur réseau (« *Gateway »* en anglais), ou encore un décodeur TV (« *Set-Top Box »,* ou STB en anglais). Par souci de concision, un dispositif-client de n'importe quel type sera souvent appelé « terminal » ci-après.

Les terminaux, tels que les téléphones intelligents (« *smartphone* » en anglais) et les ordinateurs personnels (« *Personal Computer* », ou PC en anglais) sont désormais capables d'activer et d'exploiter plusieurs interfaces logiques liées à une ou plusieurs interfaces physiques. De tels terminaux sont dits « multi-interfaces » (« *Multi-Interface* », ou MIF en anglais). Lorsqu'un terminal dispose de plusieurs interfaces capables de le raccorder à différents réseaux d'accès (par exemple : fixe, mobile, ou WLAN), il bénéficie alors d'un accès dit « hybride », parce qu'il combine différentes technologies de réseaux d'accès.

Plusieurs adresses IP peuvent alors être attribuées à ces terminaux MIF pour qu'ils puissent se connecter à différents types de réseaux tels qu'un réseau fixe, un réseau mobile ou un réseau WLAN (initiales des mots anglais « *Wireless Local Area Network* » signifiant « Réseau Local Sans-Fil », dont les réseaux Wi-Fi sont un exemple emblématique), de manière simultanée ou différée. Ces adresses IP peuvent :
- appartenir à la même famille d'adresses ou à des familles d'adresses distinctes (IPv4, IPv6 ou les deux),
- avoir des durées de vie différentes,
- avoir des portées différentes, par exemple adresse IPv4 privée, adresse IPv6 unique de portée locale (*Unique Local Address,* ou ULA en anglais), ou adresse IPv6 de portée globale (*Global Unicast Address,* ou GUA en anglais), et
- être affectées à la même interface réseau logique ou à différentes interfaces réseau logiques.

On notera toutefois que la caractéristique « MIF » est volatile, car la capacité d'utiliser plusieurs interfaces dépend des conditions de raccordement au(x) réseau(x), de la localisation du dispositif, ou d'autres facteurs. Un dispositif MIF peut notamment exploiter la pluralité d'interfaces dont il dispose en cours d'établissement d'une connexion simple (c'est-à-dire, une connexion établie le long d'un chemin unique avec un correspondant donné), voire après l'établissement d'une connexion simple. On notera également qu'un dispositif ne sait pas a priori s'il lui est possible d'utiliser *plusieurs* chemins distincts pour établir une connexion avec un correspondant donné ; plus précisément, le dispositif n'acquiert cette information (le cas échéant) qu'à l'issue d'une phase au cours de laquelle il tente d'établir une connexion utilisant des chemins multiples avec le correspondant.

On rappelle qu'une « connexion à chemins multiples » est une connexion établie entre deux dispositifs empruntant simultanément un ou plusieurs chemins entre ces deux dispositifs. Une telle connexion obéit à un protocole dédié, tel que MPTCP (Multi-Path TCP), qui peut éventuellement être défini comme une extension d'un protocole de transport défini antérieurement, tel que TCP (initiales des mots anglais « *Transmission Control Protocol* » signifiant « Protocole de Contrôle de Transmission »). Autrement dit, une connexion à chemins multiples est un agrégat d'une ou plusieurs connexions simples empruntant un même chemin ou des chemins différents (partiellement ou complètement disjoints).

On rappelle également que, dans le domaine des réseaux, on appelle « agrégation de liens » le regroupement de plusieurs liens associés à autant d'interfaces (logiques) comme s'il s'agissait d'un seul lien associé à une seule interface, notamment dans le but d'accroître le débit au-delà des limites d'un seul lien, mais également d'appliquer les mêmes procédures d'exploitation à l'ensemble des liens ainsi agrégés (notion de « *fate sharing* » en anglais). En particulier, les offres de services concernant un terminal disposant d'un accès hybride reposent sur l'introduction dans le réseau de fonctions permettant d'agréger l'ensemble des connexions réseau d'un terminal (par exemple : WLAN et 3G, ou : ADSL, WLAN et 4G).

Eventuellement, l'agrégation de liens permet aussi de faire en sorte que d'autres interfaces prennent le relais si un lien réseau tombe en panne (principe de redondance). L'agrégation de liens s'applique à tout type de trafic acheminé le long de ces liens, y compris du trafic IP.

L'agrégation de liens peut également être utilisée pour répartir le trafic sur plusieurs liens. Dans ce cas, la répartition de trafic entre des liens qui font l'objet d'un agrégat dépend de divers paramètres ; la répartition de trafic peut dépendre par exemple du type de trafic, tel que TCP ou UDP (initiales des mots anglais « *User Datagram Protocol* » signifiant « Protocole de Datagramme Utilisateur »), ou de la politique d'ingénierie de trafic, telle que la Qualité de Service (« *Quality of Service* », ou QoS en anglais) requise.

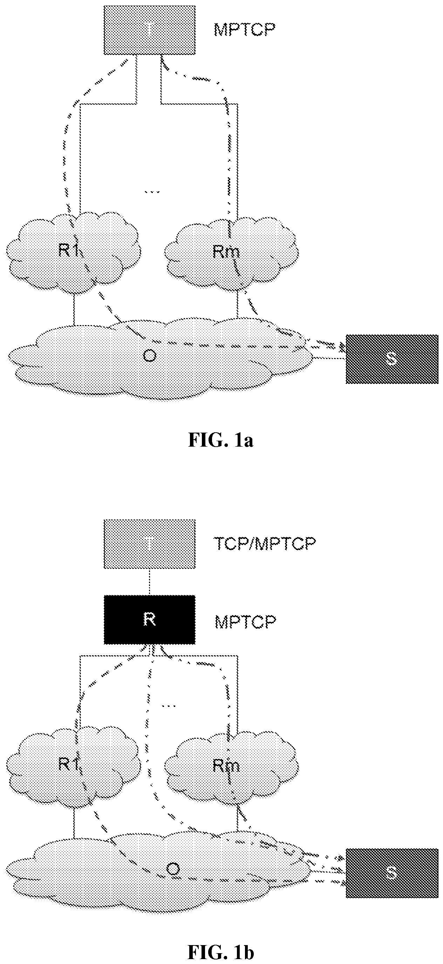

A titre d'exemple, on a représenté sur la **figure 1a** un terminal T connecté à un serveur S via plusieurs réseaux IP notés R1, ..., Rm et O, en mettant en œuvre le protocole de connexion à chemins multiples MPTCP. La nature des différents réseaux d'accès R1, ..., Rm peut être filaire, sans-fil, ou autre ; par ailleurs, ces accès peuvent être multiples, c'est-à-dire que le terminal T peut avoir la capacité de se connecter à différents réseaux d'accès de manière simultanée ou non.

De même, on a représenté sur la **figure 1b** un terminal T compatible avec MPTCP ou seulement avec TCP, et placé derrière un équipement, dit dispositif-relais R ; ce dispositif-relais R est lui-même connecté à un serveur S via plusieurs réseaux IP notés R1, ..., Rm et O, en mettant en œuvre le protocole de connexion à chemins multiples MPTCP.

De manière générale, on appellera « dispositif-relais » un équipement localisé dans le réseau et agissant au nom d'un ou de plusieurs dispositif-clients, tels qu'un terminal ou une passerelle. Cette configuration permet au dispositif-client de bénéficier d'un usage optimisé des ressources réseau disponibles, et également d'établir des connexions à chemins multiples dans un délai réduit.

On notera que l'agrégation de liens ne fait aucune hypothèse quant à la configuration de la machine distante. Ainsi, une machine source peut activer une fonction d'agrégation de liens sans que la machine distante n'utilise une telle fonction.

Divers modes d'agrégation peuvent être envisagés, parmi lesquels les trois modes suivants :
- mode de repli (« *backup* » en anglais) : ce mode consiste à utiliser des chemins secondaires en cas d'indisponibilité des chemins primaires, et ce, afin d'améliorer la disponibilité réseau et, partant, la robustesse et la fiabilité des connexions IP établies sur les différents liens ;
- mode associatif (« *bonding* » en anglais) : ce mode consiste à utiliser les ressources associées à tout ou partie des chemins disponibles, les flux IP associés à une même application pouvant être répartis entre plusieurs chemins ; le choix d'exploiter l'intégralité des chemins, ou seulement une partie d'entre eux, peut par exemple être conditionné par la nature du trafic ou les caractéristiques de disponibilité ou de fiabilité associées à chaque chemin, lesquelles peuvent varier fortement d'un chemin à l'autre ; tous les chemins sélectionnés pour ce mode associatif sont considérés comme étant des chemins primaires ; et
- mode dit de « confort » : ce mode est similaire au mode associatif, si ce n'est que les flux d'une application donnée ne sont pas répartis entre plusieurs chemins, mais sont envoyés sur un seul chemin.

On notera que ces modes ne sont pas mutuellement exclusifs, et ne sont pas spécifiques à un type particulier de trafic. Ainsi, ils peuvent être mis en place indépendamment de la nature du trafic qui sera acheminé le long des chemins agrégés selon l'un ou l'autre des différents modes.

Cependant, l'exploitation de chemins multiples pour l'établissement de communications soulève des problèmes de diverses natures.

Il est communément admis que l'utilisation de mécanismes de répartition de charge entre plusieurs chemins doit veiller à ce que ces chemins possèdent un niveau de qualité de transfert comparable, afin notamment de ne pas fragiliser l'intégrité des données caractéristiques d'une connexion donnée et échangées le long de ces différents chemins (la qualité de transfert peut être caractérisée par plusieurs paramètres dont, notamment, la latence, la gigue et/ou le taux de perte de paquets).

Lorsqu'un terminal bénéficie d'un accès hybride, sa capacité effective à exploiter l'ensemble de ses interfaces est généralement associée à la qualité des réseaux d'accès concernés, telle que perçue par le terminal ou par une application activée dans le terminal. Cette qualité peut être exprimée en termes de bande passante disponible, ou de temps d'accès à une ressource désirée, ou encore en termes de variation du délai de transmission, comme indiqué dans le document RFC 3393 de l'IETF (Internet Engineering Task Force). Cette qualité est naturellement variable d'un réseau d'accès à l'autre, et peut présenter de fortes disparités de nature à compromettre l'établissement d'une communication à chemins multiples sur les différents réseaux d'accès ; le risque d'une perte d'intégrité des flux échangés au cours de la communication sera d'autant plus important que ces disparités seront grandes, au point que la communication pourrait devenir inintelligible. De plus, cette disparité varie dans le temps en fonction, par exemple, du taux d'utilisation des ressources d'un réseau. Quant au lien agrégé, sa qualité dépend aussi de la localisation et de l'efficacité des fonctions réseau qui permettent d'agréger l'ensemble des connexions réseau d'un terminal.

Ces niveaux de qualité différents peuvent compromettre l'établissement de sous-sessions supplémentaires dans le contexte d'une connexion à chemins multiples. L'importance du risque de perte d'intégrité évoqué précédemment pourrait inciter le terminal à n'établir qu'une connexion simple, quitte à perdre les bénéfices d'une connexion à chemins multiples, tels que l'optimisation des ressources en bande passante disponibles ou la préservation de la continuité d'une connexion en cas de perte de rattachement à un premier réseau et de rattachement à un second réseau.

Un tel risque est par ailleurs exacerbé dans le contexte d'un terminal ne comportant pas de moyens propres lui permettant d'établir une connexion à chemins multiples, et impliquant pour ce faire un dispositif-relais tel que décrit succinctement ci-dessus. Dans ce contexte, la question de la disparité des niveaux de qualité associés à l'utilisation de plusieurs fonctions-relais disponibles (par exemple, selon la localisation du terminal distant avec lequel le terminal souhaite établir une communication) est d'autant plus complexe à résoudre que le terminal ne dispose pas nécessairement des informations et de l'intelligence requises pour sélectionner le dispositif-relais présentant les meilleurs garanties de qualité, par exemple selon la nature du trafic, de l'application, ou du service associés à la communication.

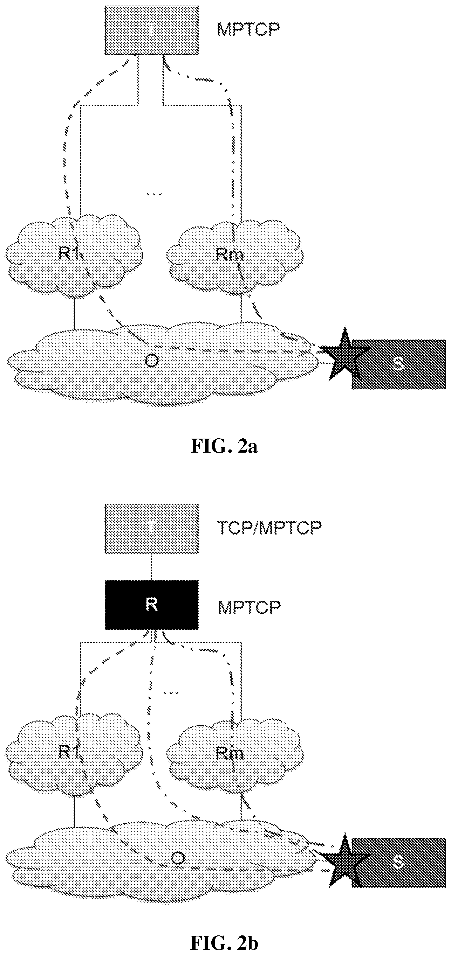

Par ailleurs, les protocoles à chemins multiples ne font pas encore, à ce jour, l'objet d'une adoption généralisée par les serveurs de contenus. Ainsi, certains serveurs de contenus traitent les connexions multiples comme des connexions disjointes, et ne disposent pas de mécanisme leur permettant de corréler plusieurs connexions pour les associer à un et un seul terminal, ce qui a pour conséquence fâcheuse l'échec de toute tentative d'établissement d'une connexion à chemins multiples, comme illustré sur la **figure 2a****.**

Comme le montre la **figure 2b****,** ce problème de l'incompatibilité d'un serveur avec les connexions à chemins multiples impacte l'efficacité des communications de tout terminal souhaitant communiquer avec un tel serveur, que le terminal soit directement connecté au réseau ou via un dispositif-relais.

Pour aider les terminaux, passerelles résidentielles (par exemple, domestiques ou d'entreprise), décodeurs TV et autres dispositifs-clients à établir et maintenir des connexions via des chemins multiples, les fournisseurs de connectivité IP utilisent des dispositifs appelés « concentrateurs de connexions réseau ». On appelle « concentrateur de connexions réseau » toute fonction réseau permettant d'agréger les connexions exploitant les différents chemins susceptibles d'être utilisés par un dispositif pour établir une communication avec un dispositif distant.

Un concentrateur de connexions réseau (on utilisera simplement le terme de « concentrateur » par souci de concision) peut, par exemple, être une fonction embarquée dans une passerelle résidentielle, cohabiter avec une fonction-relais (« *proxy* » en anglais) MPTCP ou SCTP (Stream Control Transmission Protocol) ou avec un point de terminaison de tunnel GRE (Generic Routing Encapsulation), ou encore être un point de terminaison de tunnels IP-in-IP ou de tunnels de niveau 2. Le cas échéant, l'agrégat de tous les chemins multiples par un concentrateur peut donner lieu à l'établissement d'un ou plusieurs tunnels virtuels, par exemple pour faciliter les opérations de gestion (par isolation du trafic échangé sur les différents chemins ainsi agrégés, et amélioration du processus de détection de pannes) liées à l'établissement de cette communication.

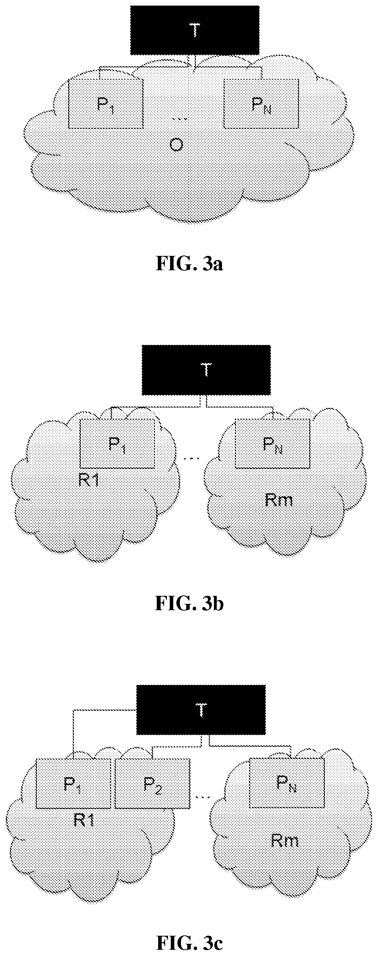

Les **figures 3a, 3b et 3c** illustrent, à titre d'exemples, divers types d'architectures associées à des concentrateurs de connexions réseau.

Ces figures montrent un terminal T connecté à un ou plusieurs réseaux IP R1, ..., Rm ou O via *N* nœuds (*P*₁,*P*₂, *...,P_{N}*) embarquant une fonction de concentrateur de connexions réseau. Un tel nœud peut par exemple être une passerelle (domestique ou d'entreprise) ou un routeur IP. On voit sur les figures que :
- le terminal peut être connecté à un seul réseau O géré par un seul fournisseur de connectivité IP ayant déployé au moins un concentrateur de connexions réseau (figure 3a), ou
- le terminal peut être connecté à m réseaux R1, ..., Rm qui tous hébergent au moins un concentrateur de connexions réseau (figure 3b), ou encore
- le terminal peut être connecté à m réseaux R1, ..., Rm dont une partie héberge plusieurs concentrateurs de connexions réseau (figure 3c).

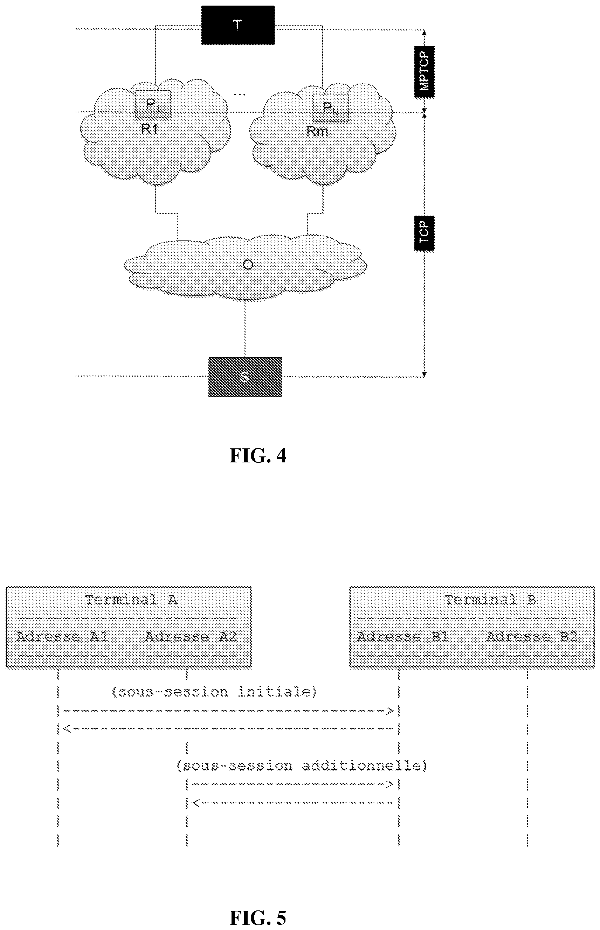

Or, avantageusement, l'intervention d'un concentrateur de connexions réseau a notamment pour effet qu'une connexion qui est vue par un dispositif local comme étant une connexion à chemins multiples, peut être vue par un dispositif distant comme étant une pluralité de connexions simples, ainsi que l'illustre la **figure 4****.**

Mais un fournisseur de connectivité IP peut tout aussi bien décider d'utiliser un concentrateur de connexions réseau sur le, ou les chemins sur lesquels une communication est établie, même si le dispositif distant est compatible avec les connexions à chemins multiples (par exemple, MPTCP). En effet, l'utilisation d'un concentrateur permet avantageusement de contrôler en permanence la qualité de la connexion agrégée, grâce, par exemple, à l'activation de mécanismes dits « d'accélération de connexions TCP ». Par ailleurs, la présence du concentrateur facilite l'activation de filtres requis pour des besoins d'interception légale, car l'intégralité du trafic passe par le concentrateur.

Dans le but d'optimiser les ressources fournies par les concentrateurs, les opérateurs réseau cherchent à gérer la répartition de charge des concentrateurs déployés dans leur réseau pour l'établissement et l'entretien des connexions à chemins multiples. Par exemple, un opérateur peut souhaiter :
- retirer un concentrateur d'une certaine connexion entre deux points d'extrémité, sans pour autant retirer le concentrateur d'une ou de plusieurs connexions avec d'autres points d'extrémité, et ce, afin de réduire la charge de ce concentrateur, ou
- retirer un concentrateur de toutes les connexions dans lesquelles il intervient, et ce, pour faciliter les opérations d'entretien du concentrateur (par exemple, lors d'opérations planifiées de mise à jour logicielle majeure).

Cet opérateur aura alors à résoudre plusieurs problèmes techniques. Supposons, pour fixer les idées, que l'un des points d'extrémité est un terminal d'un abonné à ce réseau, et l'autre un serveur de contenus joignable via ce réseau. L'opérateur devra alors notamment faire face aux difficultés suivantes :
- si le terminal est compatible avec les connexions à chemins multiples, mais le serveur ne l'est pas, le retrait du concentrateur de cette connexion ne permettrait plus à l'opérateur d'offrir à l'abonné le même niveau de qualité que celui apporté par l'utilisation d'un concentrateur, jusqu'à perdre le bénéfice (amélioration du temps d'accès au contenu, par exemple) de la connexion à chemins multiples établie grâce à ce concentrateur ; et
- même si le terminal et le serveur sont tous deux compatibles avec les connexions à chemins multiples, un retrait (éventuellement prématuré) du concentrateur (qui est en coupure de flux) causerait une rupture de la connexion, rupture non-sollicitée par le terminal ou le serveur.

Le document EP 2 882 148 décrit un procédé pour établir une connexion de transfert de données entre un dispositif et un autre dispositif en utilisant un protocole basique ayant une extension permettant un transfert de données amélioré.

La présente invention concerne donc un procédé d'optimisation de la charge d'un concentrateur de connexions réseau, dans lequel les paquets de données émis ou reçus par un dispositif-client compatible avec un protocole de connexion à chemins multiples donné, sont interceptés par un concentrateur joignable depuis au moins un réseau auquel ledit dispositif-client est connecté, ledit concentrateur permettant d'agréger des connexions exploitant une pluralité de chemins susceptibles d'être utilisés par le dispositif-client. Ledit procédé est remarquable en ce qu'il comprend les étapes suivantes :
a) le dispositif-client émet un message d'établissement de connexion avec un correspondant,
b) ledit message d'établissement de connexion est intercepté par le concentrateur,
c) le concentrateur envoie audit correspondant un message d'établissement de connexion dont l'adresse source, dite première adresse, est identique à l'une des adresses du concentrateur,
d) le concentrateur envoie au correspondant des informations comprenant une autre adresse, dite deuxième adresse, et
e) le concentrateur notifie le correspondant qu'il doit basculer la session associée à ladite première adresse de manière à l'associer à ladite deuxième adresse.

En effet, les auteurs de la présente invention ont réalisé que, du fait de la compatibilité du dispositif-client et du concentrateur avec les connexions à chemins multiples, il était possible d'éviter d'interrompre la communication en cours entre le dispositif-client et son correspondant. L'intégrité de la communication n'est pas remise en cause car le correspondant migre localement les états caractéristiques de la session en cours pour les associer à une nouvelle adresse (ladite deuxième adresse) communiquée au correspondant. Contrairement au comportement nominal d'un terminal TCP, dans lequel toute modification d'au moins l'adresse IP ou du numéro de port est de nature à pénaliser le fonctionnement de - voire rompre brutalement - une connexion TCP en cours, le procédé selon l'invention garantit la continuité de session en prévoyant l'envoi au correspondant d'un message lui indiquant de corréler l'adresse initialement utilisée pour établir la connexion avec la nouvelle adresse. Le correspondant traite ici ces deux adresses comme des adresses équivalentes du point de vue de la gestion des connexions. Ce faisant, il peut mettre à jour ses tables de connexions pour remplacer l'adresse initiale (ainsi que, optionnellement, le numéro de port) par la nouvelle adresse (ainsi que, optionnellement, le nouveau numéro de port) sans qu'aucun autre message de contrôle ne doive être envoyé à cet effet.

Grâce à ces dispositions, la mise en œuvre de l'invention est complètement transparente pour le dispositif-client.

On notera que, comme illustré dans les modes de réalisation décrits ci-dessous, ladite notification de basculement de la session peut être implicite ou explicite.

On notera également que le procédé d'optimisation selon l'invention s'applique à tout type de trafic IP. En particulier, ce procédé peut être avantageusement mis en œuvre pour échanger des données transportées conformément aux protocoles TCP, UDP, SCTP, IP-in-IP, TCP-over-UDP, ou TCP-over-TCP. A titre d'exemple, la mise en place de tunnels GRE ou IP-in-IP permet d'agréger tout ou partie du trafic IP (incluant notamment le trafic TCP et UDP) entre un terminal, et un ou plusieurs concentrateurs.

On notera également que ledit dispositif-client peut être n'importe quel dispositif compatible avec le protocole IP. Ce dispositif-client peut être de type quelconque, par exemple un terminal, un routeur, une passerelle résidentielle, ou un décodeur TV, et peut être un dispositif MIF ou un dispositif mono-interface. Il peut disposer d'une ou plusieurs adresses IP affectées à chacune de ses interfaces physiques ou logiques. Il peut aussi ne disposer que d'une seule interface, auquel cas on supposera qu'il est situé derrière un dispositif-relais (tel qu'un routeur ou une passerelle résidentielle) connecté à un ou plusieurs réseaux et compatible avec un mécanisme d'agrégation de liens. Par ailleurs, ce dispositif-client peut être configuré pour s'abstenir d'exploiter un mécanisme d'agrégation de liens réseau pour certains réseaux, ou dans certaines conditions de fonctionnement (par exemple, en cas de surcharge des concentrateurs de connexions réseau).

Par ailleurs, dans le cas particulier où ledit protocole de connexion à chemins multiples est le protocole MPTCP, l'invention permet d'améliorer significativement l'ingénierie et le fonctionnement (que l'on décrira ci-dessous) des connexions à chemins multiples, en améliorant la qualité et la robustesse du processus de gestion de sous-sessions caractéristique du protocole MPTCP. Par exemple, la mise en place de tunnels, mentionnée ci-dessus, peut être avantageusement combinée avec les fonctions MPTCP pour des besoins d'ingénierie, tels qu'une réduction de la charge des relais MPTCP le cas échéant, si le serveur distant est compatible avec le protocole MPTCP ; un opérateur réseau pourra ainsi optimiser les ressources réseau dédiées à une fonction-relais MPTCP.

Selon des caractéristiques particulières, ladite deuxième adresse est identique à l'une des adresses dudit dispositif-client, ou à l'une des adresses d'un concentrateur de secours.

Ainsi, par exemple en vue d'opérations planifiées d'entretien d'un concentrateur ou en raison de la surcharge d'un concentrateur, un opérateur aura le choix entre :
- retirer ce concentrateur des chemins empruntés par tout ou partie du trafic, et/ou
- basculer tout ou partie du trafic depuis ce concentrateur, dit « concentrateur initial », vers un ou plusieurs concentrateurs, dits « concentrateurs de secours ».

Si le correspondant du dispositif-client n'est pas compatible avec les connexions à chemins multiples, l'opérateur ne retirera le concentrateur initial qu'après l'avoir remplacé par au moins un concentrateur de secours. En revanche, si le correspondant est lui aussi compatible avec les connexions à chemins multiples, l'opérateur peut, pour tout ou partie du trafic, soit remplacer le concentrateur initial par au moins un concentrateur de secours, soit retirer purement et simplement le concentrateur (on perdra dans ce dernier cas, pour le trafic concerné, le bénéfice des mécanismes de contrôle de qualité susmentionnés, mais on préservera du moins la connexion à chemins multiples).

Grâce à ces dispositions, à l'issue des étapes selon l'invention, le dispositif-client et son correspondant communiquent, pour tout ou partie du trafic, sans passer par le concentrateur initial (sauf évidemment décision contraire prise ultérieurement).

Selon d'autres caractéristiques particulières, ledit correspondant est lui aussi compatible avec ledit protocole à chemins multiples, et :
- lors de ladite étape d), ledit concentrateur mentionne ladite deuxième adresse dans une première option insérée dans un message de contrôle de session, et
- lors de ladite étape e), le concentrateur mentionne ladite première adresse dans une deuxième option insérée dans un message de contrôle de session.

Selon encore d'autres caractéristiques particulières, lors desdites étapes d) et e), ledit concentrateur insère, dans un message de contrôle de session envoyé audit correspondant, une option qui fournit au correspondant ladite deuxième adresse, et qui notifie implicitement le correspondant qu'il doit basculer la session associée à ladite première adresse de manière à l'associer à ladite deuxième adresse.

Selon encore d'autres caractéristiques particulières, lors desdites étapes d) et e), ledit concentrateur envoie audit correspondant au moins un message de notification, qui fournit au correspondant ladite deuxième adresse, et qui notifie implicitement le correspondant qu'il doit basculer la session associée à ladite première adresse de manière à l'associer à ladite deuxième adresse.

Selon encore d'autres caractéristiques particulières :
- ledit correspondant a la capacité de traiter les informations caractéristiques de la mise en œuvre du protocole OSPF (Open Shortest Path First), et
- l'équipement qui embarque la fonction de concentrateur est raccordé à, ou est lui-même un routeur OSPF,
et, lors desdites étapes d) et e), ledit concentrateur envoie audit correspondant un paquet de type LSA (Link State Advertisement) Opaque, qui fournit au correspondant ladite deuxième adresse, et qui notifie implicitement le correspondant qu'il doit basculer la session associée à ladite première adresse de manière à l'associer à ladite deuxième adresse.

Selon un deuxième aspect, l'invention concerne un concentrateur de connexions réseau, joignable depuis au moins un réseau auquel est connecté un dispositif-client compatible avec un protocole de connexion à chemins multiples donné, comprenant des moyens pour intercepter les paquets de données émis ou reçus par ledit dispositif-client et pour agréger des connexions exploitant une pluralité de chemins susceptibles d'être utilisés par le dispositif-client. Ledit concentrateur est remarquable en ce qu'il comprend en outre des moyens pour :
- intercepter un message d'établissement de connexion avec un correspondant émis par ledit dispositif-client,
- envoyer audit correspondant un message d'établissement de connexion dont l'adresse source, dite première adresse, est identique à l'une des adresses du concentrateur,
- envoyer au correspondant des informations comprenant une autre adresse, dite deuxième adresse, et
- notifier le correspondant qu'il doit basculer la session associée à ladite première adresse de manière à l'associer à ladite deuxième adresse.

Selon des caractéristiques particulières, ladite deuxième adresse est identique à l'une des adresses dudit dispositif-client, ou à l'une des adresses d'un concentrateur de secours.

Selon d'autres caractéristiques particulières, ledit correspondant étant lui aussi compatible avec ledit protocole à chemins multiples, ledit concentrateur comprend en outre des moyens pour :
- mentionner ladite deuxième adresse dans une première option insérée dans un message de contrôle de session, et
- mentionner ladite première adresse dans une deuxième option insérée dans un message de contrôle de session.

Selon encore d'autres caractéristiques particulières, ledit concentrateur comprend en outre des moyens pour insérer, dans un message de contrôle de session envoyé audit correspondant, une option qui fournit au correspondant ladite deuxième adresse, et qui notifie implicitement le correspondant qu'il doit basculer la session associée à ladite première adresse de manière à l'associer à ladite deuxième adresse.

Selon encore d'autres caractéristiques particulières, ledit concentrateur comprend en outre des moyens pour envoyer audit correspondant au moins un message de notification, qui fournit au correspondant ladite deuxième adresse, et qui notifie implicitement le correspondant qu'il doit basculer la session associée à ladite première adresse de manière à l'associer à ladite deuxième adresse.

Selon encore d'autres caractéristiques particulières, ledit correspondant a la capacité de traiter les informations caractéristiques de la mise en œuvre du protocole OSPF (Open Shortest Path First), l'équipement qui embarque la fonction de concentrateur est raccordé à, ou est lui-même un routeur OSPF, et ledit concentrateur comprend en outre des moyens pour envoyer audit correspondant un paquet de type LSA (Link State Advertisement) Opaque, qui fournit au correspondant ladite deuxième adresse, et qui notifie implicitement le correspondant qu'il doit basculer la session associée à ladite première adresse de manière à l'associer à ladite deuxième adresse.

Les avantages offerts par ces concentrateurs sont essentiellement les mêmes que ceux offerts par les procédés d'optimisation succinctement exposés ci-dessus.

On notera qu'il est possible de réaliser ces concentrateurs dans le contexte d'instructions logicielles et/ou dans le contexte de circuits électroniques.

L'invention vise également un programme d'ordinateur téléchargeable depuis un réseau de communications et/ou stocké sur un support lisible par ordinateur et/ou exécutable par un microprocesseur. Ce programme d'ordinateur est remarquable en ce qu'il comprend des instructions pour l'exécution des étapes d'un des procédés d'optimisation succinctement exposés ci-dessus, lorsqu'il est exécuté sur un ordinateur.

Les avantages offerts par ce programme d'ordinateur, sont essentiellement les mêmes que ceux offerts par les procédés d'optimisation succinctement exposés ci-dessus.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :
- la figure 1a, mentionnée ci-dessus, représente un terminal T compatible avec MPTCP et connecté à un serveur S via plusieurs réseaux IP,
- la figure 1b, mentionnée ci-dessus, représente un terminal T compatible avec TCP ou MPTCP, et placé derrière un dispositif-relais R compatible avec MPTCP et connecté à un serveur S via plusieurs réseaux IP,
- la figure 2a, mentionnée ci-dessus, représente l'échec d'une tentative de connexion MPTCP dans la configuration de la figure 1a,
- la figure 2b, mentionnée ci-dessus, représente l'échec d'une tentative de connexion MPTCP dans la configuration de la figure 1b,
- les figures 3a, 3b et 3c, mentionnées ci-dessus, illustrent divers types d'architectures associées à des concentrateurs de connexions réseau,
- la figure 4, mentionnée ci-dessus, représente un terminal T compatible avec MPTCP et connecté à un serveur S compatible avec TCP via *N* concentrateurs de connexions réseau (*P*₁,*P*₂, *..., P_{N}*) situés dans m réseaux d'accès R1, ..., Rm,
- la figure 5 représente un agrégat de sous-sessions TCP formant une unique connexion MPTCP,
- la figure 6 illustre un premier mode de réalisation de l'invention,
- les figures 7 et 8 illustrent un deuxième mode de réalisation de l'invention,
- la figure 9 illustre un troisième mode de réalisation de l'invention,
- les figures 10 et 11 illustrent un quatrième mode de réalisation de l'invention,
- la figure 12 représente un premier exemple de format pour les messages de description de session envoyés par un concentrateur initial à un concentrateur de secours,
- la figure 13 représente un deuxième exemple de format pour les messages de description de session envoyés par un concentrateur initial à un concentrateur de secours,
- la figure 14 illustre un cinquième mode de réalisation de l'invention,
- la figure 15 illustre un sixième mode de réalisation de l'invention,
- la figure 16 illustre un septième mode de réalisation de l'invention, et
- la figure 17 illustre un huitième mode de réalisation de l'invention.

Les modes de réalisation de l'invention décrits ci-dessous proposent l'utilisation d'options TCP ou IP (les options IP sont des champs optionnels, décrits dans le document RFC 791 de l'IETF, que l'on peut inclure dans un paquet IPv4) pour des communications de différentes natures, y compris celles qui ne reposent pas sur un protocole de transport particulier, ou celles reposant sur le protocole UDP. On pourrait, en variante, exploiter tel ou tel schéma d'encapsulation, mais ceux-ci sont relativement complexes à mettre en œuvre.

On rappelle que le protocole TCP (défini notamment dans le document RFC 793) est l'un des protocoles principaux utilisés par les terminaux connectés à un réseau IP (par exemple, Internet), de sorte que la littérature évoque souvent la suite de protocoles « TCP/IP ». Le protocole TCP permet d'acheminer de manière fiable, ordonnée et sans erreurs un flux de données numériques entre des applications exécutées sur des terminaux connectés à un réseau local (par exemple, Intranet) ou à l'Internet. Le protocole TCP fonctionne au niveau de la couche transport du modèle OSI. Les navigateurs Web utilisent le protocole TCP lorsqu'ils se connectent à des serveurs distants ; le protocole TCP est aussi utilisé pour acheminer du courrier électronique ou pour transférer des fichiers d'un endroit à un autre. Des protocoles comme HTTP, HTTPS, SMTP, POP3, IMAP, SSH, FTP, Telnet, ainsi que de nombreux autres protocoles sont transportés sur des connexions TCP. Une connexion TCP est identifiée par l'adresse et le numéro de port du terminal source, ainsi que par l'adresse et le numéro de port du terminal de destination.

Deux terminaux peuvent insérer des « options TCP » dans les messages TCP échangés entre eux, afin, par exemple, d'optimiser la qualité de la connexion TCP. De telles options occupent l'espace disponible en fin d'en-tête TCP, et ont une longueur (« *length* » en anglais) exprimée en octets. Le type (« *kind* » en anglais) d'option est un identifiant unique descriptif de la nature de l'option TCP. Par exemple, la valeur « 0 » indique la fin de la liste des options, et la valeur « 2 » indique la taille maximum du segment TCP (« *Maximum Segment Size* », ou MSS en anglais).

On notera que d'autres moyens pour encoder les informations contenues dans les options TCP définies ci-après peuvent être considérés, en fonction du mode de communication activé entre les concentrateurs. Le terme « option » est également utilisé pour désigner, par exemple, un en-tête d'extension (« *Extension Header* » en anglais) IPv6, une option IPv4, le ou les champs « adresse source/numéro de port source » d'un paquet encapsulé, le ou les champs « adresse de destination/numéro de port de destination » d'un paquet encapsulé, un ou plusieurs champs d'un paquet encapsulé, un ou plusieurs champs d'un paquet qui encapsule un paquet d'origine, ou une extension d'un schéma d'encapsulation, aussi bien qu'une option du protocole TCP ou d'un autre protocole de transport, ou bien encore une combinaison de ces différents moyens.

L'avènement des terminaux MIF introduit la possibilité d'exploiter les ressources de plusieurs chemins via les réseaux disponibles pour établir une connexion TCP, en utilisant tout ou partie des adresses IP allouées aux différentes interfaces des terminaux MIF. Toutefois, cette possibilité introduit une complexité caractéristique du mode de fonctionnement du protocole TCP : étant donné que les connexions TCP sont associées à une adresse IP et un numéro de port, toute modification d'au moins l'une de ces informations est de nature à pénaliser le fonctionnement de la connexion TCP en cours, et, partant, le service utilisant ladite connexion TCP. Ce changement est particulièrement préjudiciable lorsque le terminal se voit attribuer une nouvelle adresse IP, ou lorsque le terminal se connecte à un autre réseau, ou encore lorsque l'interface à laquelle l'adresse IP est associée n'est plus disponible. Par exemple, des moyens pour informer un correspondant TCP distant qu'une adresse IP n'est plus valide sont alors nécessaires pour assurer le maintien d'une connexion existante sans interrompre les services offerts par cette connexion TCP.

Le groupe de travail « mptcp » de l'IETF a été missionné en 2009 pour spécifier des extensions du protocole TCP capables de s'accommoder des contraintes imposées par la possibilité d'affecter plusieurs adresses IP aux différentes interfaces logiques ou physiques d'un terminal. Ce groupe de travail a publié les premières spécifications du protocole MPTCP (cf. A. Ford, C. Raiciu et M. Handley, « TCP Extensions for Multipath Operation with Multiple Addresses », RFC 6824, janvier 2013) - que certains téléphones « intelligents » et certains systèmes d'exploitation sont d'ailleurs déjà capables de mettre en œuvre. Le protocole MPTCP répond en particulier au besoin d'assurer une continuité de session IP en cas de mobilité du terminal. L'IETF envisage de faire progresser le statut des spécifications MPTCP actuelles, pour en faire de véritables normes au sens de l'IETF.

Le protocole MPTCP a donc été proposé pour minimiser les risques de rupture intempestive d'une connexion TCP, liés par exemple à de telles modifications d'adressage, et plus généralement pour répondre aux exigences posées par un contexte où un terminal a la capacité de se raccorder à un ou plusieurs réseaux via une ou plusieurs interfaces. En outre, il est prévu dans le document RFC 6824 qu'en cas d'échec d'une tentative d'établissement d'une connexion MPTCP, la connexion bascule automatiquement sur une connexion TCP simple.

La présente invention s'applique de manière générale à tout protocole de type TCP/IP régissant les connexions à chemins multiples. A des fins purement illustratives, on va décrire ci-dessous l'application de l'invention au protocole MPTCP, après quelques rappels sur certaines propriétés de ce protocole.

Selon le protocole MPTCP, on appelle « sous-session » (« *sub-flow* » en anglais) une connexion TCP reposant sur l'utilisation de l'un des couples (adresse IP, numéro de port) disponibles. De ce fait, une connexion MPTCP est un agrégat de sous-sessions TCP. A titre d'exemple, la **figure 5** montre une connexion MPTCP entre un terminal A et un terminal B ; la sous-session initiale est établie entre l'adresse A1 du terminal A et l'adresse B1 du terminal B ; ultérieurement, une sous-session additionnelle est établie entre l'adresse A2 du terminal A et l'adresse B1 du terminal B. Un terminal MIF peut ainsi se connecter à de nouveaux réseaux, ou se détacher de certains des réseaux, tout en maintenant une même connexion à chemins multiples.

Un exemple particulièrement avantageux d'application du protocole MPTCP est le transfert de fichiers volumineux utilisant les ressources du protocole FTP (File Transfer Protocol). Un dispositif agissant en tant que dispositif-client FTP peut dynamiquement exploiter l'ensemble des chemins disponibles qui lui permettent d'accéder à un serveur FTP, pourvu que ce dernier soit apte à mettre en œuvre les différentes connexions MPTCP établies par le dispositif-client FTP. Le temps de transfert des données est ainsi significativement réduit par rapport à une connexion TCP.

Différents cas d'usage peuvent être envisagés pour le protocole MPTCP, tels que :
- échanger des données entre plusieurs réseaux d'accès sans-fil,
- réduire la charge d'un réseau mobile, en basculant une partie du trafic vers un réseau d'accès sans-fil,
- optimiser l'utilisation des ressources réseau en exploitant de manière simultanée les ressources de plusieurs liens d'accès et en répartissant la charge de trafic d'une ou plusieurs connexions MPTCP sur ces différents liens, ce qui permet d'augmenter significativement la bande passante associée à l'établissement d'une connexion MPTCP, et
- fiabiliser une connexion MPTCP en basculant le trafic acheminé le long d'un chemin primaire vers un chemin de secours en cas de rupture du chemin primaire, et ce, de manière transparente pour l'utilisateur (c'est-à-dire sans interruption de service).

Les systèmes d'exploitation présentent aux applications des interfaces de programmation dédiées, appelées API (*Application Programming Interface*) pour interagir avec les couches TCP et IP. L'API classique présentée aux applications TCP/IP est l'interface *« socket ».* L'interface *« socket »* est caractérisée par plusieurs attributs, tels que « *Local Socket Address », « Remote Socket Address* » et « *Protocol* ». Des extensions de l'API TCP/IP, appelées API MPTCP, ont été spécifiées par l'IETF dans le document RFC 6897 pour permettre aux applications de contrôler les connexions MPTCP.

Une connexion MPTCP est initialisée comme n'importe quelle connexion TCP classique, à l'exception du fait qu'une option TCP appelée MP_CAPABLE (signifiant que le terminal émetteur est compatible avec les extensions MPTCP) est incluse dans le message contenant le drapeau d'initialisation de sous-session (SYN) et dans les messages ultérieurs. Un terminal MPTCP peut signaler au terminal distant la disponibilité d'une adresse IP supplémentaire à l'aide d'une option TCP appelée ADD_ADDR, sans nécessairement créer de sous-session associée.

La signalisation de plusieurs adresses IP disponibles et susceptibles d'être utilisées pour communiquer avec un correspondant peut conduire à l'échec de l'établissement de certaines sous-sessions TCP, parce que les adresses IP externes telles que perçues par les terminaux distants peuvent ne pas être les mêmes que celles visibles localement. Pour cette raison, l'option ADD_ADDR du protocole MPTCP comprend un identificateur d'adresse, appelé « Address ID », utilisé pour identifier sans ambiguïté une adresse IP disponible. Cette disposition est censée éviter les problèmes induits par la présence d'un NAT sur le chemin suivi par les paquets entre les deux terminaux qui ont établi une connexion MPTCP. L'option ADD_ADDR est également utilisée pour transmettre un numéro de port dans le cas où l'un des terminaux MPTCP n'utilise pas le même numéro de port pour l'ensemble des adresses IP disponibles.

De même, le protocole MPTCP prévoit des dispositions qui sont censées permettre, notamment, la traversée de pare-feux (« *firewall* » en anglais). Plus précisément, la spécification du protocole MPTCP stipule que les numéros de séquence tels qu'indiqués dans l'en-tête TCP sont spécifiques à chaque sous-session, tandis que le numéro de séquence indiqué dans l'option DSS (« *Data Sequence Signal* ») du protocole MPTCP sert à associer ces sous-sessions à la même connexion MPTCP.

Le protocole MPTCP entend ainsi s'affranchir des contraintes imposées par la prolifération massive de « *middle boxes* » (fonctions intermédiaires dans une chaîne de communication), comme les NAT et les pare-feux déployés dans les réseaux actuels.

Le protocole MPTCP utilise notamment les options TCP suivantes :
- MP_CAPABLE : cette option, mentionnée ci-dessus, est utilisée pour signaler au terminal distant que le terminal émetteur est compatible avec les options MPTCP ;
- ADD_ADDR : cette option, mentionnée ci-dessus, est utilisée pour ajouter une nouvelle adresse ; elle comprend un champ optionnel de deux octets permettant de fournir également un numéro de port, le cas échéant ;
- REMOVE_ADDR : cette option est utilisée pour supprimer une adresse ;
- MP : cette option est utilisée pour modifier la priorité d'une connexion ;
- MP_JOIN : cette option est utilisée pour identifier la connexion TCP qui est associée à l'établissement d'une nouvelle sous-session ;
- MP_FAIL : cette option est utilisée pour revenir au mode TCP sans options MPTCP ; et
- MP_FASTCLOSE : cette option est utilisée pour clôturer rapidement une connexion MPTCP.

Le protocole MPTCP peut être activé selon plusieurs modes :
- *mode natif:* deux terminaux MPTCP établissent toutes les sous-sessions qui correspondent aux numéros des adresses/ports disponibles, et utilisent l'ensemble de ces sous-sessions ;
- *mode primaire* : deux terminaux MPTCP signalent des sous-sessions, mais seul un sous-ensemble de ces sous-sessions est effectivement utilisé pour le transfert de données ;
- *mode secondaire* : en cas d'indisponibilité (ou de surcharge) du sous-ensemble « primaire » de sous-sessions, un sous-ensemble « secondaire » de sous-sessions est alors sollicité pour assurer la continuité de la connexion MPTCP ; et
- *mode repli* : deux terminaux MPTCP utilisent une sous-session unique ; en cas de panne, le trafic est basculé vers une nouvelle sous-session créée à cet effet.

On va décrire à présent huit modes de réalisation du procédé d'optimisation de la charge d'un concentrateur de connexions réseau selon l'invention. Dans ces modes de réalisation, on suppose que l'utilisateur d'un terminal compatible avec MPTCP, abonné à un certain réseau, souhaite communiquer avec un serveur de contenus joignable via ce réseau.

Les cinq premiers modes ne sont applicables que lorsque le serveur est, lui aussi, compatible avec MPTCP. Les trois derniers modes sont applicables aussi bien dans le cas où le serveur est compatible avec MPTCP que dans le cas où il ne l'est pas.

Lorsque le serveur est compatible avec MPTCP, le concentrateur inclut de préférence l'option MP_CAPABLE lors de l'établissement de la connexion avec le serveur.

Il peut donc s'avérer utile que le concentrateur puisse vérifier si un correspondant est compatible avec les connexions à chemins multiples. Pour ce faire, on peut prévoir que les concentrateurs de connexions du réseau utilisent une liste de contrôle. Cette liste de contrôle sera par exemple construite de la manière suivante :
- une entité, de préférence localisée dans le réseau, se charge d'effectuer des tests de support de MPTCP sur la base, par exemple, de la liste des sites les plus populaires (en termes de consultation), tels que représentés dans les listes « Top 1000 sites » ou « Top 10000 sites » d'Alexa ;
- la procédure de test peut par exemple être mise en œuvre par un robot simulant des connexions MPTCP vers une liste de serveurs prédéfinis ;
- afin d'optimiser la charge du robot, l'opérateur réseau peut restreindre la liste des serveurs à tester pour n'inclure, par exemple, que les serveurs les plus populaires, ou ceux qui engendrent le plus de trafic ;
- ces tests peuvent être effectués d'une manière périodique ; la périodicité des tests est configurée par chaque fournisseur de service réseau ; ces tests peuvent être par exemple quotidiens, hebdomadaires ou mensuels ;
- les résultats de ces tests sont communiqués aux différents concentrateurs déployés dans le réseau, avec ou sans demande explicite de leur part.

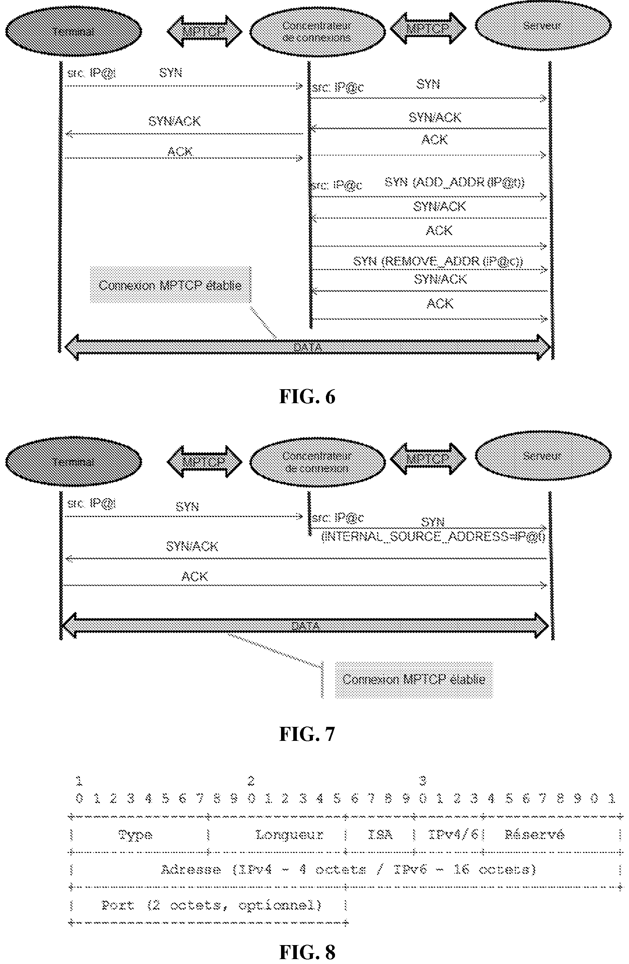

La **figure 6** illustre un premier mode de réalisation de l'invention.

Lors d'une première étape, le terminal émet un message SYN d'établissement de connexion MPTCP avec le serveur.

Lors d'une deuxième étape, ce message d'établissement de connexion est intercepté par le concentrateur.

Lors d'une troisième étape, le concentrateur envoie audit correspondant un message SYN d'établissement de connexion dont l'adresse source est identique à l'une des adresses IP@c du concentrateur.

Lors d'une quatrième étape, en cours de communication, le concentrateur fournit au serveur l'adresse IP@t (ainsi que, optionnellement, le numéro de port) du terminal (tels qu'indiqués dans le message SYN d'établissement de connexion reçu du terminal par le concentrateur), dans un autre message de contrôle de session SYN envoyé au serveur, au moyen de l'option ADD_ADDR. Une priorité plus haute peut être associée à l'adresse du terminal.

Lors d'une cinquième étape, le concentrateur notifie le serveur, à l'aide de l'option REMOVE_ADDR, qu'il doit mettre fin à la session relative à l'adresse IP@c utilisée par le concentrateur pour établir la sous-session initiale. Optionnellement, afin que le serveur puisse préparer la migration du trafic correspondant vers la nouvelle adresse, ce message de notification indique une certaine date d'échéance ; si c'est le cas, le serveur doit procéder à la migration des états avant cette date d'échéance.

On notera que les options ADD_ADDR et REMOVE_ADDR peuvent être envoyées dans n'importe quel message de contrôle TCP, tel qu'un message « ACK », et non seulement dans un message « SYN ». La RFC 6824 (mentionnée ci-dessus) indique que la réception de messages « ACK » ne nécessite pas d'acquittement. Ainsi, ce premier mode de réalisation pourrait être simplifié en prévoyant d'envoyer les options ADD_ADDR et REMOVE_ADDR dans des messages ACK. Néanmoins, pour des besoins de fiabilisation, il est préférable d'envoyer ces options dans des messages SYN (qui sont suivis, en cas de bonne réception, d'un accusé de réception) pour ne pas risquer de perturber la connexion en cours en cas de non-réception du message de la quatrième étape ou du message de la cinquième étape.

Lors d'une sixième étape, le serveur bascule la session sur l'adresse du terminal, optionnellement à la date d'échéance indiquée lors de la cinquième étape.

Le terminal et le serveur communiquent alors directement, c'est-à-dire sans passer par le concentrateur.

La **figure 7** illustre un deuxième mode de réalisation de l'invention.

Lors d'une première étape, le terminal émet un message SYN d'établissement de connexion MPTCP avec le serveur.

Lors d'une deuxième étape, ce message d'établissement de connexion est intercepté par le concentrateur.

Lors d'une troisième étape, lors de l'établissement de la connexion ou en cours de communication, le concentrateur insère, dans un message de contrôle de session SYN envoyé au serveur, une option que l'on appellera « INTERNAL_SOURCE_ADDRESS » (notée « ISA »). Cette option ISA, illustrée sur la **figure 8****,** fournit au serveur l'adresse IP@t (ainsi que, optionnellement, le numéro de port) du terminal (tels qu'indiqués dans le message SYN d'établissement de connexion reçu du terminal par le concentrateur). En même temps, cette option ISA notifie implicitement le serveur qu'il doit basculer (optionnellement à une date d'échéance indiquée dans le message de notification) la session relative à l'adresse IP@c (utilisée par le concentrateur pour établir la connexion initiale) de manière à associer la session à l'adresse IP@t indiquée dans l'option ISA.

Lors d'une quatrième étape, le serveur envoie un message SYN/ACK d'accusé de réception directement à l'adresse IP@t du terminal, telle que renseignée dans l'option ISA, et non à l'adresse IP@c utilisée par le concentrateur pour établir la connexion initiale.

Lors d'une cinquième étape, le serveur bascule sur l'adresse du terminal, optionnellement à la date d'échéance indiquée lors de la troisième étape.

Le terminal et le serveur communiquent alors directement, c'est-à-dire sans passer par le concentrateur.

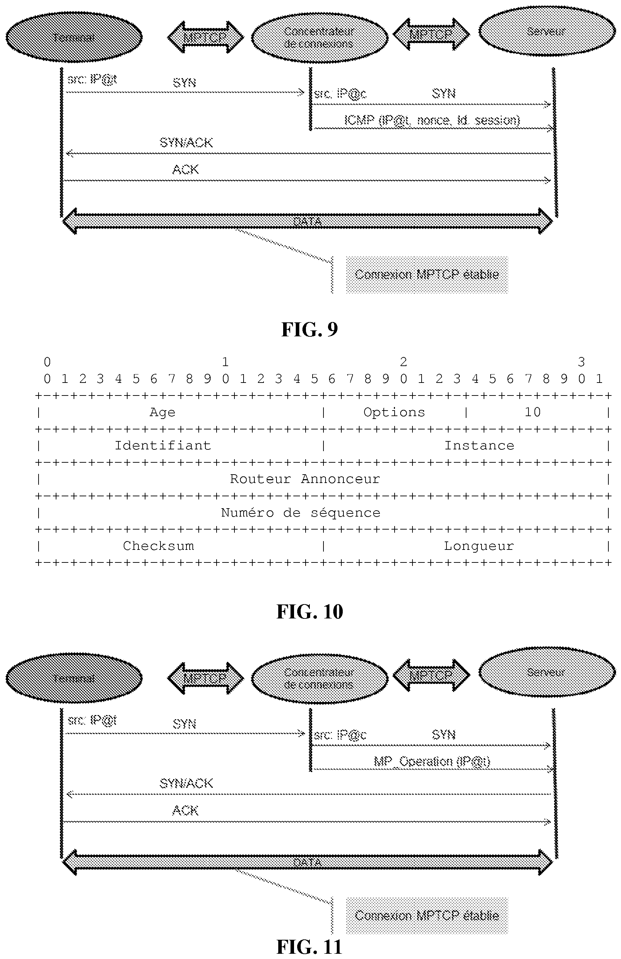

La **figure 9** illustre un troisième mode de réalisation de l'invention.

Lors d'une première étape, le terminal émet un message SYN d'établissement de connexion MPTCP avec le serveur.

Lors d'une deuxième étape, ce message d'établissement de connexion est intercepté par le concentrateur.

Lors d'une troisième étape, suite à l'établissement de la connexion ou en cours de communication, le concentrateur envoie au correspondant un message de notification, par exemple au format ICMP (Internet Control Message Protocol), qui fournit au serveur l'adresse IP@t (ainsi que, optionnellement, le numéro de port) du terminal (tels qu'indiqués dans le message SYN d'établissement de connexion reçu du terminal par le concentrateur). En même temps, ce message ICMP notifie implicitement le serveur qu'il doit basculer (optionnellement à une date d'échéance indiquée dans le message ICMP) la session relative à l'adresse IP@c (utilisée par le concentrateur pour établir la connexion initiale) de manière à associer la session à l'adresse IP@t indiquée dans le message ICMP.

Afin de permettre au serveur d'associer le message ICMP avec la connexion concernée, le concentrateur insère dans le message ICMP un identifiant de session. Optionnellement, le concentrateur insère en outre un nonce, destiné à lutter contre les attaques de type « déni de service » ou de type « usurpation d'identité » (« *spoofing* » en anglais).

Lors d'une quatrième étape, le serveur envoie un message SYN/ACK d'accusé de réception. Deux cas sont alors possibles :
- si le message ICMP a été envoyé lors de l'établissement de la connexion (cas illustré sur la figure 9), le message SYN/ACK est envoyé à l'adresse IP@t du terminal, telle que renseignée dans le message ICMP ;
- si en revanche le message ICMP a été envoyé en cours de communication, le message SYN/ACK est envoyé à l'adresse IP@c utilisée par le concentrateur pour établir la connexion ; en variante, dans ce dernier cas, on peut prévoir que le serveur n'envoie aucun message SYN/ACK et, optionnellement, que le concentrateur envoie plusieurs fois le message ICMP pour s'assurer que le serveur est effectivement notifié.

Lors d'une cinquième étape, le serveur bascule sur l'adresse du terminal, optionnellement à la date d'échéance indiquée lors de la troisième étape.

Le terminal et le serveur communiquent alors directement, c'est-à-dire sans passer par le concentrateur.

Selon un quatrième mode de réalisation de l'invention, l'acquisition de l'adresse du terminal et d'une adresse du concentrateur par le serveur est réalisée en utilisant les ressources d'un protocole de routage dynamique.

A titre d'exemple, on va décrire une application de ce mode de réalisation aux réseaux mettant en œuvre le protocole de routage dynamique OSPF (Open Shortest Path First) (décrit principalement dans le document RFC 2328 de l'IETF) ; ces réseaux seront désignés ci-dessous par « réseaux OSPF ». Dans ce quatrième mode de réalisation, on suppose que :
1) l'équipement qui embarque la fonction de concentrateur est raccordé à, ou est un routeur OSPF, et
2) le serveur a la capacité de traiter les informations caractéristiques de la mise en œuvre du protocole OSPF, telles que l'annonce de routes.

On rappelle que les routeurs d'un réseau OSPF utilisent des paquets appelés « LSA » (initiales des mots anglais « *Link State Advertisement »* signifiant « Annonce de l'Etat de Liens ») pour échanger des renseignements (par exemple, l'annonce de nouvelles routes) à l'ensemble des routeurs qui font partie de la même aire OSPF que le routeur à l'origine du paquet LSA, voire à l'ensemble des routeurs du domaine (regroupant plusieurs aires OSPF, le cas échéant) auquel le routeur à l'origine de l'annonce appartient. La dénomination « *Link State* » se réfère à la nature du protocole OSPF et à l'algorithme sur lequel OSPF s'appuie pour calculer et sélectionner les routes qui seront installées dans la table d'acheminement des routeurs OSPF du réseau. Cet algorithme tient compte des métriques associées à l'ensemble des liens qui connectent les routeurs du réseau OSPF.

Il existe plusieurs types de paquets LSA, dont les paquets LSA Opaque.

Les paquets LSA Opaque fournissent un mécanisme générique destiné à faciliter les extensions fonctionnelles du protocole OSPF. L'information véhiculée dans les paquets LSA Opaque peut être soit directement utilisée par le protocole OSPF, par exemple pour affiner le processus de calcul de routes, soit indirectement par une application ou un système qui souhaite utiliser les ressources d'un réseau OSPF pour distribuer une information particulière à l'ensemble des routeurs qui composent ce réseau OSPF. Conformément au document RFC 5250 de l'IETF, les LSA Opaque consistent en un en-tête LSA standard suivi d'un champ d'information aligné sur 32 bits, dont le contenu est caractéristique de l'information distribuée dans le réseau OSPF ; le codage de cette information est de type TLV (Type, Longueur, Valeur), et peut être constitué d'un ou de plusieurs triplets TLV.

Il existe trois types de LSA Opaque : les LSA de « type 9 » (type « *link-local* »), qui ne sont pas distribuées au-delà du lien local auquel est connecté le routeur OSPF qui émet le paquet LSA, les LSA de « type 10 » (type « *area-local* »), qui ne sont pas distribuées au-delà des frontières de l'aire OSPF à laquelle appartient le routeur OSPF qui émet un tel paquet, et les LSA de « type 11 » (type « AS ») qui sont distribuées à l'ensemble des routeurs OSPF qui composent le système autonome (« *Autonomous System* », ou AS en anglais), que ce système autonome soit décomposé en plusieurs aires OSPF ou pas.

Le présent mode de réalisation de l'invention repose sur l'utilisation d'une LSA Opaque, que l'on appellera « MP_Operation » (pour « *MultiPath Operation* »), et qui sera de préférence de type 11, afin que les informations qu'elle véhicule puissent être propagées dans tout le domaine.

L'en-tête de la LSA MP_Operation, illustré sur la **figure 10****,** est conforme à l'en-tête standard d'un paquet LSA (défini dans le document RFC 2328). L'identifiant de la LSA MP_Operation est codé sur un octet, suivi de trois octets qui représentent le champ Instance ; cet identifiant devra être attribué par la structure de gouvernance IANA (« Internet Assigned Numbers Authority »). Le champ Instance est une valeur arbitraire qui est utilisée pour le maintien de plusieurs LSA MP_Operation, jusqu'à un maximum théorique de 16777216 LSA MP_Operation pouvant être produites par un seul routeur OSPF. Le champ « âge » indique le temps (en secondes) écoulé depuis que la LSA MP_Operation a été envoyée (c'est un champ obligatoire, notamment défini dans le document RFC 5340).

La **figure 11** illustre les étapes de ce quatrième mode de réalisation.

Lors d'une première étape, le terminal émet un message SYN d'établissement de connexion MPTCP avec le serveur.

Lors d'une deuxième étape, ce message d'établissement de connexion est intercepté par le concentrateur.

Lors d'une troisième étape, suite à l'établissement de la connexion ou en cours de communication, le concentrateur envoie au correspondant une LSA de type MP_Operation, qui fournit au serveur l'adresse IP@t (ainsi que, optionnellement, le numéro de port) du terminal (tels qu'indiqués dans le message SYN d'établissement de connexion reçu du terminal par le concentrateur). En même temps, cette LSA MP_Operation notifie implicitement le serveur qu'il doit mettre fin (optionnellement à une date d'échéance indiquée dans la LSA MP_Operation) à la session relative à l'adresse IP@c utilisée par le concentrateur pour établir la connexion initiale.

Plus précisément, la LSA MP_Operation contient un « *top-level* TLV » (TLV de niveau supérieur, tel que défini dans le document RFC 5250), qui indique la nature du contenu de la LSA. Ce *top-level* TLV est défini de la façon suivante : 1 - MPTCP Endpoint Alternate Addresses (MEAA).

Le TLV MEAA décrit donc l'ensemble des adresses qui représentent un terminal connecté à un concentrateur raccordé à, ou embarqué dans le routeur à l'origine de l'annonce de la LSA MP_Operation. Ces adresses sont décrites dans une succession de sous-TLV. L'encodage des « sous-TLV » peut être effectué de la manière suivante :

| Type de Sous-TLV | Nom du Sous-TLV | Description |
|---|---|---|
| 1 | Concentrator Address | Indique une adresse allouée à un concentrateur |
| 2 | Terminal Address | Indique une adresse du terminal |
| 3 | Timeout | Indique une échéance pour migrer les sessions vers l'adresse spécifiée ; '0' est une indication selon laquelle le basculement doit s'effectuer immédiatement suite à la réception du message |

Lors d'une quatrième étape, le serveur envoie un message SYN/ACK d'accusé de réception. Deux cas sont alors possibles :
- si la LSA MP_Operation a été envoyée lors de l'établissement de la connexion (cas illustré sur la figure 11), le message SYN/ACK est envoyé à l'adresse IP@t du terminal, telle que renseignée dans la LSA MP_Operation ;
- si en revanche la LSA MP_Operation a été envoyée en cours de communication, le message SYN/ACK est envoyé à l'adresse IP@c utilisée par le concentrateur pour établir la connexion ; en variante, dans ce dernier cas, on peut prévoir que le serveur n'envoie aucun message SYN/ACK et, optionnellement, que le concentrateur envoie plusieurs fois la LSA MP_Operation pour s'assurer que le serveur est effectivement notifié.

Lors d'une cinquième étape, le serveur bascule la session sur l'adresse du terminal, optionnellement à la date d'échéance indiquée lors de la troisième étape.

Le terminal et le serveur communiquent alors directement, c'est-à-dire sans passer par le concentrateur.

Le présent mode de réalisation permet, avantageusement, une granularité de niveau terminal : le contenu de la LSA Opaque peut en effet être dicté par une politique de type PBR (Policy-Based Routing, tel que défini dans le document RFC 1104) et selon différents critères, tels que l'adresse source du terminal, ou le marquage du champ DS (« *Differentiated Services* ») des paquets envoyés par les différents terminaux ; cette politique va conditionner le comportement du routeur OSPF co-localisé avec le concentrateur ou auquel est raccordé le concentrateur, et permettre, le cas échéant, d'optimiser à la fois les ressources du concentrateur (par exemple, en décidant d'envoyer la LSA Opaque ou de ne pas l'envoyer en fonction d'informations caractéristiques du terminal) et les ressources du réseau (l'envoi conditionnel d'une LSA Opaque MP_Operation permet en effet d'éviter de surcharger inutilement le réseau).

On notera que l'on pourra, en variante, dans le cadre du présent mode de réalisation, utiliser d'autres protocoles de routage dynamique que le protocole OSPF, par exemple un autre protocole de type IGP (Interior Gateway Protocol), tel que le protocole IS-IS (Intermediate System to Intermediate System Routing Protocol).

Dans les quatre modes de réalisation suivants, on remplace le concentrateur initial par un concentrateur de secours (l'homme du métier pourra sans difficulté adapter ces modes de réalisation au cas du remplacement d'un concentrateur initial par *plusieurs* concentrateurs de secours). Pour ce faire, on alloue une même adresse IP@1 aux interfaces internes du concentrateur initial et du concentrateur de secours (on appelle interface interne l'interface utilisée par le concentrateur pour recevoir le trafic provenant du terminal) ; afin de diriger le trafic émis par le terminal vers le concentrateur de secours alors que la même adresse IP a été allouée au concentrateur initial, on modifie le routage, par exemple, en modifiant les préférences IGP (Interior Gateway Protocol), ou en retirant l'annonce de la route permettant d'atteindre le concentrateur initial, ou encore en mettant en œuvre une politique de redirection explicite à l'aide d'un mécanisme de type « policy-based routing », par exemple.

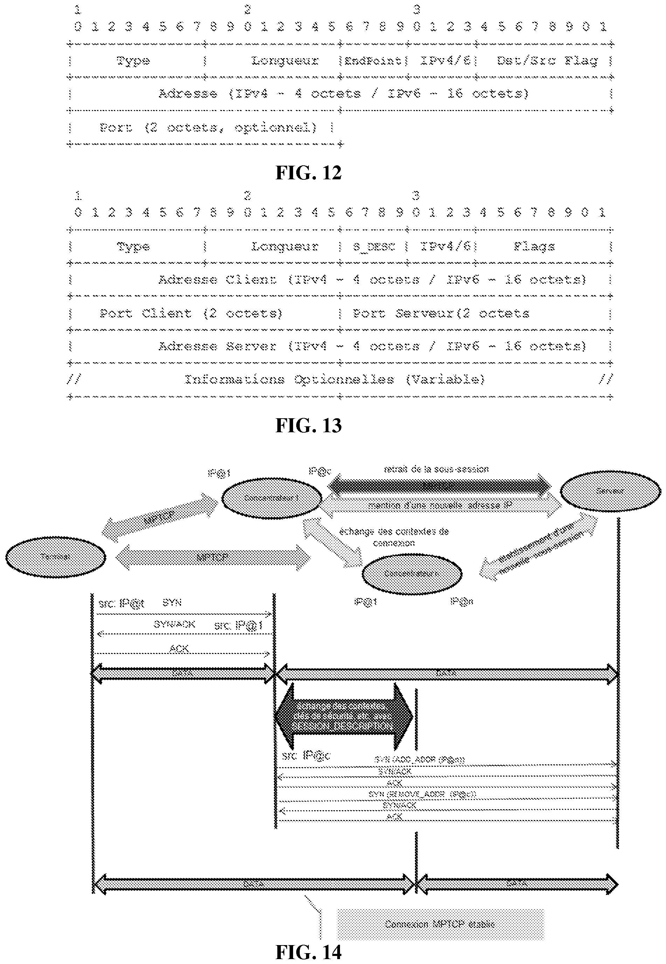

Ces quatre modes de réalisation ont en commun les étapes suivantes.
1. Le concentrateur initial détecte, selon des informations configurées par l'opérateur, ou sur la foi d'événements observés (par exemple, dépassement d'un seuil de trafic, ou pourcentage de CPU utilisée) que toutes, ou certaines connexions doivent être basculées vers un ou plusieurs concentrateurs de secours.
2. Le concentrateur initial identifie les connexions à transférer vers le, ou les concentrateurs de secours. Cette identification peut être réalisée selon des instructions configurées sur le concentrateur initial (par exemple, selon certains serveurs avec lesquels une connexion est établie et identifiée par leur adresse, ou selon certains terminaux/dispositifs-client qui ont établi une connexion et identifiés par au moins l'une de leurs adresses).
3. Une liste de concentrateurs de secours est préalablement configurée dans le concentrateur initial, ainsi que des clés de sécurité à utiliser pour sécuriser le transfert de flux et minimiser ainsi les risques d'interception de trafic/connexions. En variante, cette liste de concentrateurs de secours peut également être acquise de manière dynamique par le concentrateur initial, afin de faciliter les opérations de configuration liées à l'exploitation du concentrateur initial et des concentrateurs de secours. Une telle dynamique peut également être exploitée pour optimiser la mise en place des politiques de charge des différents concentrateurs selon diverses considérations : par exemple, le fonctionnement de jour et le fonctionnement de nuit du concentrateur initial et des concentrateurs de secours peuvent être indexés sur des profils de trafic qui vont influencer la manière dont la charge entre les concentrateurs pourra être répartie selon la plage horaire d'opération. En fonction de l'information de charge des concentrateurs de secours telle que dynamiquement acquise par le concentrateur initial, celui-ci pourra requérir l'établissement d'une ou plusieurs connexions MPTCP avec un ou plusieurs de ces concentrateurs de secours.
4. A l'initiative du concentrateur initial, une ou plusieurs connexions TCP sont établies avec au moins un concentrateur de secours afin d'échanger les contextes de connexions (principalement l'adresse des terminaux distants concernés, numéros de port, et ainsi de suite). Pour ce faire, on pourra commodément utiliser une option TCP que l'on appellera « SESSION DESCRIPTION ».
   Selon une première variante, illustrée sur la **figure 12****,** l'option SESSION_DESCRIPTION est structurée sous la forme d'un « *container »* décrivant la session en cours (un *container* est une structure permettant de regrouper l'ensemble des informations caractéristiques et descriptives d'une session en cours, ce qui évite de devoir manipuler tout un ensemble d'options distinctes, chacune étant descriptive d'une et une seule information caractéristique d'une session en cours). L'option SESSION_DESCRIPTION indique au moins l'adresse du terminal et l'adresse du serveur. Ces adresses peuvent être codées dans une option « EndPoint ». Il est précisé s'il s'agit d'une adresse IPv4 ou IPv6. L'attribut « Dst/Src Flag » indique si l'option transporte l'adresse de destination ou l'adresse source.
   Selon une deuxième variante, illustrée sur la **figure 13****,** l'option SESSION_DESCRIPTION est structurée sous la forme d'une option dédiée. L'option SESSION_DESCRIPTION indique l'adresse du terminal et celle du serveur. L'attribut « Flags » est utilisé pour d'éventuels besoins futurs, tels que l'indication du type d'informations optionnelles (« *Information Elements »* en anglais) incluses dans l'option. L'option SESSION_DESCRIPTION peut notamment inclure l'adresse externe et le numéro de port qui sont utilisés par le concentrateur pour cette connexion. Cette adresse et ce numéro de port doivent être utilisés tout au long de la connexion, sinon le serveur rejettera les paquets. Un condensé de sécurité peut être inclus dans cette option.
5. Optionnellement, le concentrateur initial indique une date d'échéance pour chaque contexte ou pour l'ensemble des contextes à transférer lors du basculement vers le concentrateur de secours, de façon à faciliter les opérations d'entretien et à minimiser, le cas échéant, les risques d'interruption de service (en cas de problème d'accès aux concentrateurs de secours par exemple).
6. Le concentrateur initial notifie le serveur (correspondant du dispositif-client) de la disponibilité d'une nouvelle adresse. Cette nouvelle adresse est l'une des adresses du concentrateur de secours choisi pour la présente connexion (et non, comme dans les quatre premiers modes de réalisation, une adresse du terminal). Une ou plusieurs sous-sessions sont alors ajoutées à la connexion MPTCP.
7. Le concentrateur initial notifie (explicitement ou implicitement) le correspondant qu'il doit mettre fin à la session relative à l'adresse du concentrateur initial, optionnellement à ladite date d'échéance, suite à quoi le terminal, le concentrateur de secours et le serveur échangent directement des données.

La **figure 14** illustre un cinquième mode de réalisation de l'invention.

Ce cinquième mode de réalisation est analogue au premier mode de réalisation, décrit ci-dessus en référence à la figure 6.

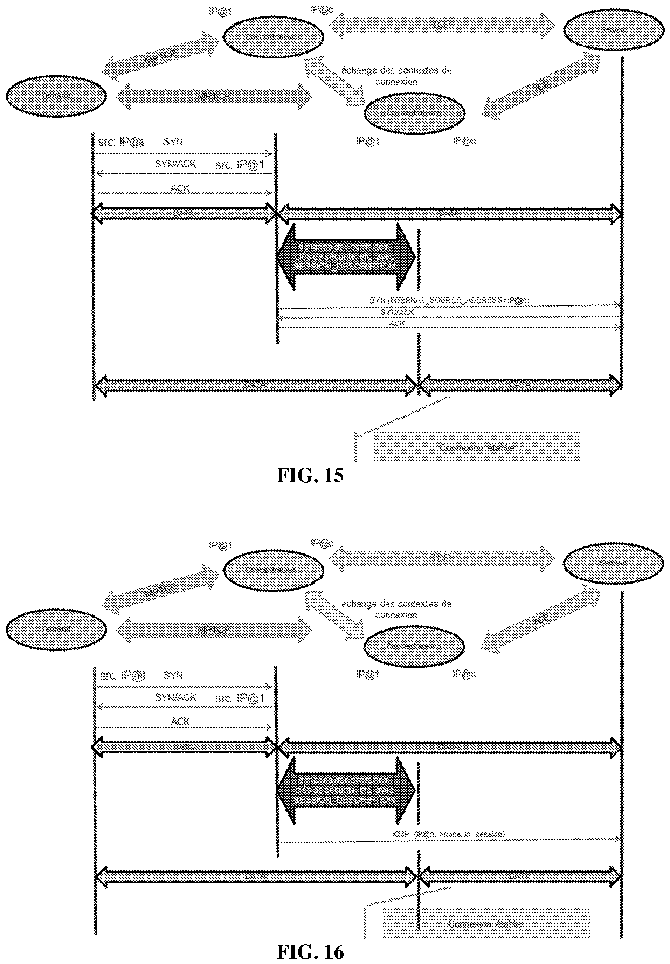

La **figure 15** illustre un sixième mode de réalisation de l'invention.

Ce sixième mode de réalisation est analogue au premier mode de réalisation, décrit ci-dessus en référence à la figure 7.

La **figure 16** illustre un septième mode de réalisation de l'invention.

Ce septième mode de réalisation est analogue au premier mode de réalisation, décrit ci-dessus en référence à la figure 9.

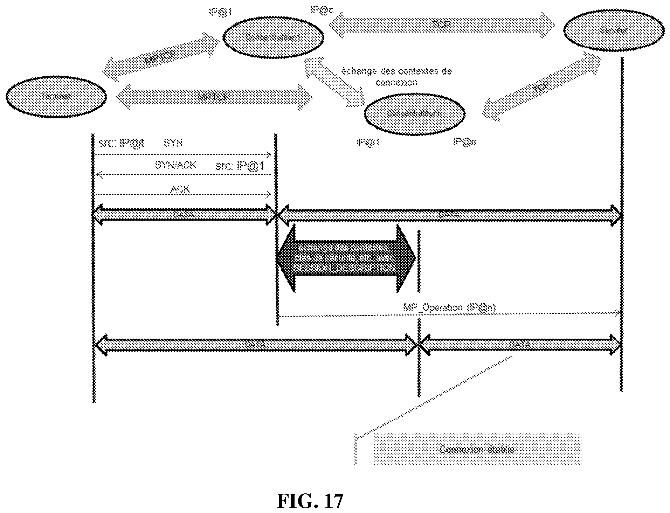

La **figure 17** illustre un huitième mode de réalisation de l'invention.

Ce huitième mode de réalisation est analogue au premier mode de réalisation, décrit ci-dessus en référence à la figure 11.

L'invention peut être mise en œuvre au sein de nœuds de réseaux de communication, par exemple des concentrateurs de connexions réseau, au moyen de composants logiciels et/ou matériels. La fonction de concentrateur peut être hébergée dans un centre de traitement de données (« *datacenter »* en anglais) ou embarquée dans un équipement du réseau de transport. La fonction de concentrateur peut aussi être une instance virtuelle.

Lesdits composants logiciels pourront être intégrés à un programme d'ordinateur classique de gestion de nœud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en œuvre de l'un quelconque des procédés d'optimisation de la charge d'un concentrateur de connexions réseau selon l'invention.

En effet, l'invention vise aussi un programme d'ordinateur tel que décrit succinctement ci-dessus. Ce programme d'ordinateur peut être stocké sur un support lisible par ordinateur et peut être exécutable par un microprocesseur. Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations inamovible, ou partiellement ou totalement amovible, comportant des instructions d'un programme d'ordinateur tel que décrit succinctement ci-dessus.

Ce support d'informations peut être n'importe quelle entité ou dispositif capable de stocker le programme. Par exemple, le support d'informations peut comprendre un moyen de stockage, tel qu'une ROM, par exemple un CD ROM ou une ROM de circuit microélectronique, ou un moyen d'enregistrement magnétique, tel qu'un disque dur, ou encore une clé USB (« *USB flash drive* » en anglais).

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau tel que l'Internet.

En variante, le support d'informations peut être un circuit intégré dans lequel le programme est incorporé, le circuit étant adapté pour exécuter ou pour être utilisé dans l'exécution de l'un quelconque des procédés d'optimisation selon l'invention.

## Revendications

1. Procédé d'optimisation de la charge d'un concentrateur de connexions réseau, dans lequel les paquets de données émis ou reçus par un dispositif-client compatible avec un protocole de connexion à chemins multiples donné, sont interceptés par ledit concentrateur, ledit concentrateur permettant d'agréger des connexions exploitant une pluralité de chemins susceptibles d'être utilisés par le dispositif-client, ledit procédé comprenant les étapes suivantes :
a) le dispositif-client émet un message d'établissement de connexion avec un correspondant,
b) ledit message d'établissement de connexion est intercepté par le concentrateur,
c) le concentrateur envoie audit correspondant un message d'établissement de connexion dont l'adresse source, dite première adresse, est identique à l'une des adresses du concentrateur,
d) le concentrateur envoie au correspondant des informations comprenant une autre adresse, dite deuxième adresse, identique à l'une des adresses dudit dispositif-client, ou à l'une des adresses d'un concentrateur de secours, et
e) le concentrateur notifie le correspondant qu'il doit basculer la session associée à ladite première adresse de manière à l'associer à ladite deuxième adresse en remplacement de ladite première adresse, ledit basculement comprenant une migration locale au niveau du correspondant des états caractéristiques de la session vers la deuxième adresse.

2. Procédé d'optimisation selon la revendication 1, **caractérisé en ce que** ledit correspondant est lui aussi compatible avec ledit protocole à chemins multiples, et **en ce que** :
- lors de ladite étape d), ledit concentrateur mentionne ladite deuxième adresse dans une première option (insérée dans un message de contrôle de session, et
- lors de ladite étape e), le concentrateur mentionne ladite première adresse dans une deuxième option insérée dans un message de contrôle de session.

3. Procédé d'optimisation selon la revendication 1, **caractérisé en ce que**, lors desdites étapes d) et e), ledit concentrateur insère, dans un message de contrôle de session envoyé audit correspondant, une option qui fournit au correspondant ladite deuxième adresse, et qui notifie implicitement le correspondant qu'il doit basculer la session associée à ladite première adresse de manière à l'associer à ladite deuxième adresse.

4. Procédé d'optimisation selon la revendication 1, **caractérisé en ce que**, lors desdites étapes d) et e), ledit concentrateur envoie audit correspondant au moins un message de notification, qui fournit au correspondant ladite deuxième adresse, et qui notifie implicitement le correspondant qu'il doit basculer la session associée à ladite première adresse de manière à l'associer à ladite deuxième adresse.

5. Procédé d'optimisation selon la revendication 1, **caractérisé en ce que** :
- ledit correspondant a la capacité de traiter les informations caractéristiques de la mise en œuvre du protocole OSPF, Open Shortest Path First, et
- l'équipement qui embarque la fonction de concentrateur est raccordé à, ou est lui-même un routeur OSPF,
et **en ce que**, lors desdites étapes d) et e), ledit concentrateur envoie audit correspondant un paquet de type LSA, Link State Advertisement, Opaque, qui fournit au correspondant ladite deuxième adresse, et qui notifie implicitement le correspondant qu'il doit basculer la session associée à ladite première adresse de manière à l'associer à ladite deuxième adresse.

6. Procédé d'optimisation selon l'une quelconque des revendications 1 à 5, **caractérisé en ce que**, lors de ladite étape e), ledit concentrateur notifie audit correspondant une date d'échéance pour ledit basculement de la session.

7. Concentrateur de connexions réseau, joignable depuis au moins un réseau auquel est connecté un dispositif-client compatible avec un protocole de connexion à chemins multiples donné, comprenant des moyens pour intercepter les paquets de données émis ou reçus par ledit dispositif-client et pour agréger des connexions exploitant une pluralité de chemins susceptibles d'être utilisés par le dispositif-client, **caractérisé en ce qu'**il comprend en outre des moyens pour :
- intercepter un message d'établissement de connexion avec un correspondant émis par ledit dispositif-client,
- envoyer audit correspondant un message d'établissement de connexion dont l'adresse source, dite première adresse, est identique à l'une des adresses du concentrateur,
- envoyer au correspondant des informations comprenant une autre adresse, dite deuxième adresse, ladite deuxième adresse étant identique à l'une des adresses dudit dispositif-client, ou à l'une des adresses d'un concentrateur de secours, et
- notifier le correspondant qu'il doit basculer la session associée à ladite première adresse de manière à l'associer à ladite deuxième adresse en remplacement de la première adresse, ledit basculement comprenant une migration locale au niveau du correspondant des états caractéristiques de la session vers la deuxième adresse.

8. Concentrateur selon la revendication 7, **caractérisé en ce que**, ledit correspondant étant lui aussi compatible avec ledit protocole à chemins multiples, ledit concentrateur comprend en outre des moyens pour :
- mentionner ladite deuxième adresse dans une première option insérée dans un message de contrôle de session, et
- mentionner ladite première adresse dans une deuxième option insérée dans un message de contrôle de session.

9. Concentrateur selon la revendication 7, **caractérisé en ce qu'**il comprend en outre des moyens pour insérer, dans un message de contrôle de session envoyé audit correspondant, une option qui fournit au correspondant ladite deuxième adresse, et qui notifie implicitement le correspondant qu'il doit basculer la session associée à ladite première adresse de manière à l'associer à ladite deuxième adresse.

10. Concentrateur selon la revendication 7, **caractérisé en ce qu'**il comprend en outre des moyens pour envoyer audit correspondant au moins un message de notification, qui fournit au correspondant ladite deuxième adresse, et qui notifie implicitement le correspondant qu'il doit basculer la session associée à ladite première adresse de manière à l'associer à ladite deuxième adresse.

11. Concentrateur selon la revendication 7, **caractérisé en ce que**, ledit correspondant ayant la capacité de traiter les informations caractéristiques de la mise en œuvre du protocole OSPF, Open Shortest Path First, l'équipement qui embarque la fonction de concentrateur est raccordé à, ou est lui-même un routeur OSPF, et **en ce qu'**il comprend en outre des moyens pour envoyer audit correspondant un paquet de type LSA, Link State Advertisement, Opaque, qui fournit au correspondant ladite deuxième adresse, et qui notifie implicitement le correspondant qu'il doit basculer la session associée à ladite première adresse de manière à l'associer à ladite deuxième adresse.

12. Concentrateur selon l'une quelconque des revendications 7 à 11, **caractérisé en ce qu'**il comprend en outre des moyens pour notifier audit correspondant une date d'échéance pour ledit basculement de la session.

13. Moyen de stockage de données inamovible, ou partiellement ou totalement amovible, comportant des instructions de code de programme informatique pour l'exécution des étapes d'un procédé d'optimisation selon l'une quelconque des revendications 1 à 6.

14. Programme d'ordinateur téléchargeable depuis un réseau de communications et/ou stocké sur un support lisible par ordinateur et/ou exécutable par un microprocesseur, **caractérisé en ce qu'**il comprend des instructions pour l'exécution des étapes d'un procédé d'optimisation selon l'une quelconque des revendications 1 à 6, lorsqu'il est exécuté sur un ordinateur.

## Patentansprüche

1. Verfahren zur Optimierung der Last eines Hubs von Netzverbindungen, bei dem die von einer mit einem gegebenen Mehrwege-Verbindungsprotokoll kompatiblen Client-Vorrichtung gesendeten oder empfangenen Datenpakete vom Hub abgefangen werden, wobei der Hub es erlaubt, Verbindungen zu aggregieren, die eine Vielzahl von Wegen nutzen, die von der Client-Vorrichtung verwendet werden können, wobei das Verfahren die folgenden Schritte enthält:
a) die Client-Vorrichtung sendet eine Nachricht eines Verbindungsaufbaus mit einem Teilnehmer,
b) die Verbindungsaufbaunachricht wird vom Hub abgefangen,
c) der Hub schickt eine Verbindungsaufbaunachricht an den Teilnehmer, deren erste Adresse genannte Quellenadresse gleich einer der Adressen des Hubs ist,
d) der Hub schickt Informationen an den Teilnehmer, die eine zweite Adresse genannte andere Adresse enthalten, die gleich einer der Adressen der Client-Vorrichtung oder einer der Adressen eines Hilfs-Hubs ist, und
e) der Hub teilt dem Teilnehmer mit, dass er die der ersten Adresse zugeordnete Sitzung umschalten muss, um sie der zweiten Adresse anstelle der ersten Adresse zuzuordnen, wobei die Umschaltung im Bereich des Teilnehmers eine lokale Migration der charakteristischen Zustände der Sitzung zur zweiten Adresse enthält.

2. Optimierungsverfahren nach Anspruch 1, **dadurch gekennzeichnet, dass** auch der Teilnehmer mit dem Mehrwege-Protokoll kompatibel ist, und dass:
- im Schritt d) der Hub die zweite Adresse in einer in eine Sitzungssteuerungsnachricht eingefügten ersten Option erwähnt, und
- im Schritt e) der Hub die erste Adresse in einer in eine Sitzungssteuerungsnachricht eingefügten zweiten Option erwähnt.

3. Optimierungsverfahren nach Anspruch 1, **dadurch gekennzeichnet, dass** in den Schritten d) und e) der Hub in eine an den Teilnehmer geschickte Sitzungssteuerungsnachricht eine Option einfügt, die dem Teilnehmer die zweite Adresse liefert, und die dem Teilnehmer implizit mitteilt, dass er die der ersten Adresse zugeordnete Sitzung umschalten muss, um sie der zweiten Adresse zuzuordnen.

4. Optimierungsverfahren nach Anspruch 1, **dadurch gekennzeichnet, dass** in den Schritten d) und e) der Hub dem Teilnehmer mindestens eine Benachrichtigung schickt, die dem Teilnehmer die zweite Adresse liefert, und die dem Teilnehmer implizit mitteilt, dass er die der ersten Adresse zugeordnete Sitzung umschalten muss, um sie der zweiten Adresse zuzuordnen.

5. Optimierungsverfahren nach Anspruch 1, **dadurch gekennzeichnet, dass**:
- der Teilnehmer die Fähigkeit hat, die charakteristischen Informationen der Durchführung des OSPF-Protokolls, Open Shortest Path First, zu bearbeiten, und
- die Ausrüstung, die die Hubfunktion aufnimmt, an einen OSPF-Router angeschlossen oder selbst einer ist, und dass in den Schritten d) und e) der Hub ein Paket der Art Opaque LSA, Link State Advertisement, an den Teilnehmer schickt, das dem Teilnehmer die zweite Adresse liefert, und das dem Teilnehmer implizit mitteilt, dass er die der ersten Adresse zugeordnete Sitzung umschalten muss, um sie der zweiten Adresse zuzuordnen.

6. Optimierungsverfahren nach einem der Ansprüche 1 bis 5, **dadurch gekennzeichnet, dass** im Schritt e) der Hub dem Teilnehmer einen Fristablauf für die Umschaltung der Sitzung mitteilt.

7. Netzverbindungshub, der von mindestens einem Netz aus erreichbar ist, mit dem eine Client-Vorrichtung verbunden ist, die mit einem gegebenen Mehrwege-Verbindungsprotokoll kompatibel ist, der Einrichtungen enthält, um die von der Client-Vorrichtung gesendeten oder empfangenen Datenpakete abzufangen und um Verbindungen zu aggregieren, die eine Vielzahl von Wegen nutzen, die von der Client-Vorrichtung verwendet werden können, **dadurch gekennzeichnet, dass** er außerdem Einrichtungen enthält, um:
- eine Verbindungsaufbaunachricht mit einem Teilnehmer abzufangen, die von der Client-Vorrichtung gesendet wird,
- eine Verbindungsaufbaunachricht an den Teilnehmer zu schicken, deren erste Adresse genannte Quellenadresse gleich einer der Adressen des Hubs ist,
- Informationen an den Teilnehmer zu schicken, die eine andere, zweite Adresse genannte Adresse enthalten, wobei die zweite Adresse gleich einer der Adressen der Client-Vorrichtung oder einer der Adressen eines Hilfs-Hubs ist, und
- dem Teilnehmer mitzuteilen, dass er die der ersten Adresse zugeordnete Sitzung umschalten muss, um sie der zweiten Adresse anstelle der ersten Adresse zuzuordnen, wobei die Umschaltung im Bereich des Teilnehmers eine lokale Migration der charakteristischen Zustände der Sitzung zur zweiten Adresse enthält.

8. Hub nach Anspruch 7, **dadurch gekennzeichnet, dass**, da auch der Teilnehmer mit dem Mehrwege-Protokoll kompatibel ist, der Hub außerdem Einrichtungen enthält, um:
- die zweite Adresse in einer in eine Sitzungssteuerungsnachricht eingefügten ersten Option zu erwähnen, und
- die erste Adresse in einer in eine Sitzungssteuerungsnachricht eingefügten zweiten Option zu erwähnen.

9. Hub nach Anspruch 7, **dadurch gekennzeichnet, dass** er außerdem Einrichtungen enthält, um in eine an den Teilnehmer geschickte Sitzungssteuerungsnachricht eine Option einzufügen, die dem Teilnehmer die zweite Adresse liefert, und die dem Teilnehmer implizit mitteilt, dass er die der ersten Adresse zugeordnete Sitzung umschalten muss, um sie der zweiten Adresse zuzuordnen.

10. Hub nach Anspruch 7, **dadurch gekennzeichnet, dass** er außerdem Einrichtungen enthält, um dem Teilnehmer mindestens eine Benachrichtigung zu schicken, die dem Teilnehmer die zweite Adresse liefert, und die dem Teilnehmer implizit mitteilt, dass er die der ersten Adresse zugeordnete Sitzung umschalten muss, um sie der zweiten Adresse zuzuordnen.

11. Hub nach Anspruch 7, **dadurch gekennzeichnet, dass**, da der Teilnehmer die Fähigkeit hat, die charakteristischen Informationen der Durchführung des OSPF-Protokolls, Open Shortest Path First, zu verarbeiten, die Ausrüstung, die die Hubfunktion aufnimmt, an einen OSPF-Router angeschlossen oder selbst einer ist, und dass er außerdem Einrichtungen enthält, um an den Teilnehmer ein Paket der Art Opaque LSA, Link State Advertisement, zu schicken, das dem Teilnehmer die zweite Adresse liefert, und das dem Teilnehmer implizit mitteilt, dass er die der ersten Adresse zugeordnete Sitzung umschalten muss, um sie der zweiten Adresse zuzuordnen.

12. Hub nach einem der Ansprüche 7 bis 11, **dadurch gekennzeichnet, dass** er außerdem Einrichtungen enthält, um dem Teilnehmer einen Fristablauf zum Umschalten der Sitzung mitzuteilen.

13. Fest installierte oder teilweise oder ganz entfernbare Datenspeichereinrichtung, die EDV-Programmcodeanweisungen zur Ausführung der Schritte eines Optimierungsverfahrens nach einem der Ansprüche 1 bis 6 aufweist.

14. Computerprogramm, das von einem Kommunikationsnetz heruntergeladen und/oder auf einem computerlesbaren Träger gespeichert und/oder von einem Mikroprozessor ausgeführt werden kann, **dadurch gekennzeichnet, dass** es Anweisungen zur Ausführung der Schritte eines Optimierungsverfahrens nach einem der Ansprüche 1 bis 6 enthält, wenn es auf einem Computer ausgeführt wird.

## Claims

1. Method for optimizing the load of a network connection concentrator, wherein the data packets sent or received by a client device compatible with a given multipath connection protocol are intercepted by said concentrator, said concentrator making it possible to aggregate connections that utilize a plurality of paths that may be used by the client device, said method comprising the following steps:
a) the client device sends a connection setup message for setting up a connection to a correspondent,
b) said connection setup message is intercepted by the concentrator,
c) the concentrator sends said correspondent a connection setup message, the source address of which, known as first address, is identical to one of the addresses of the concentrator,
d) the concentrator sends the correspondent information comprising another address, known as second address, which is identical to one of the addresses of said client device or to one of the addresses of a standby concentrator, and
e) the concentrator notifies the correspondent of the need for the latter to switch over the session associated with said first address so as to associate it with said second address instead of said first address, said switchover comprising a local migration, at the correspondent, of the characteristic states of the session to the second address.

2. Optimization method according to Claim 1, **characterized in that** said correspondent is itself also compatible with said multipath protocol, and **in that**:
- during said step d), said concentrator cites said second address in a first option inserted into a session control message, and
- during said step e), the concentrator cites said first address in a second option inserted into a session control message.

3. Optimization method according to Claim 1, **characterized in that**, during said steps d) and e), said concentrator inserts an option into a session control message sent to said correspondent, which option provides the correspondent with said second address and implicitly notifies the correspondent of the need for the latter to switch over the session associated with said first address so as to associate it with said second address.

4. Optimization method according to Claim 1, **characterized in that**, during said steps d) and e), said concentrator sends said correspondent at least one notification message, which provides the correspondent with said second address and implicitly notifies the correspondent of the need for the latter to switch over the session associated with said first address so as to associate it with said second address.

5. Optimization method according to Claim 1, **characterized in that**:
- said correspondent has the ability to process the information characteristic of the implementation of the OSPF, Open Shortest Path First, protocol, and
- the equipment that incorporates the concentrator function is connected to, or is itself, an OSPF router,
and **in that**, during said steps d) and e), said concentrator sends said correspondent an Opaque LSA, Link State Advertisement, packet, which provides the correspondent with said second address and implicitly notifies the correspondent of the need for the latter to switch over the session associated with said first address so as to associate it with said second address.

6. Optimization method according to any one of Claims 1 to 5, **characterized in that**, during step e), said concentrator notifies said correspondent of a deadline for said session switchover.

7. Network connection concentrator that can be reached from at least one network to which a client device compatible with a given multipath connection protocol is connected, comprising means for intercepting the data packets sent or received by said client device and for aggregating connections that utilize a plurality of paths that may be used by the client device, **characterized in that** it further comprises means for:
- intercepting a connection setup message, sent by said client device, for setting up a connection to a correspondent,
- sending said correspondent a connection setup message, the source address of which, known as first address, is identical to one of the addresses of the concentrator,
- sending the correspondent information comprising another address, known as second address, said second address being identical to one of the addresses of said client device or to one of the addresses of a standby concentrator, and
- notifying the correspondent of the need for the latter to switch over the session associated with said first address so as to associate it with said second address instead of the first address, said switchover comprising a local migration, at the correspondent, of the characteristic states of the session to the second address.

8. Concentrator according to Claim 7, **characterized in that**, said correspondent itself also being compatible with said multipath protocol, said concentrator further comprises means for:
- citing said second address in a first option inserted into a session control message, and
- citing said first address in a second option inserted into a session control message.

9. Concentrator according to Claim 7, **characterized in that** it further comprises means for inserting an option into a session control message sent to said correspondent, which option provides the correspondent with said second address and implicitly notifies the correspondent of the need for the latter to switch over the session associated with said first address so as to associate it with said second address.

10. Concentrator according to Claim 7, **characterized in that** it further comprises means for sending said correspondent at least one notification message, which provides the correspondent with said second address and implicitly notifies the correspondent of the need for the latter to switch over the session associated with said first address so as to associate it with said second address.

11. Concentrator according to Claim 7, **characterized in that**, said correspondent having the ability to process the information characteristic of the implementation of the OSPF, Open Shortest Path First, protocol, the equipment that incorporates the concentrator function is connected to, or is itself, an OSPF router, and **in that** it further comprises means for sending said correspondent an Opaque LSA, Link State Advertisement, packet, which provides the correspondent with said second address and implicitly notifies the correspondent of the need for the latter to switch over the session associated with said first address so as to associate it with said second address.

12. Concentrator according to any one of Claims 7 to 11, **characterized in that** it further comprises means for notifying said correspondent of a deadline for said session switchover.

13. Irremovable, or partially or fully removable data storage means including computer program code instructions for executing the steps of an optimization method according to any one of Claims 1 to 6.

14. Computer program that is downloadable from a communication network and/or stored on a computer-readable medium and/or executable by a microprocessor, **characterized in that** it comprises instructions for executing the steps of an optimization method according to any one of Claims 1 to 6 when it is executed on a computer.
